(19) Europäisches Patentamt
European Patent Office
Office européen des brevets

(11) EP 0 869 914 B1

(12) # EUROPEAN PATENT SPECIFICATION

(45) Date of publication and mention of the grant of the patent:
**06.05.2004 Bulletin 2004/19**

(21) Application number: **97901348.9**

(22) Date of filing: **03.01.1997**

(51) Int Cl.[7]: **C01C 3/16**, C09C 1/04, C09D 5/08, C23F 11/00

(86) International application number:
**PCT/US1997/000138**

(87) International publication number:
**WO 1997/025274 (17.07.1997 Gazette 1997/31)**

(54) **PIGMENT GRADE CORROSION INHIBITOR HYBRID COMPOSITIONS AND PROCEDURES**

HYBRIDE KORROSIONS-INHIBITOR PIGMENT ZUSAMMENSETZUNGEN UND VERFAHREN

COMPOSITIONS HYBRIDES PIGMENTAIRES ANTICORROSION ET PROCEDES CORRESPONDANTS

(84) Designated Contracting States:
**BE DE ES FR GB IT**

(30) Priority: **05.01.1996 US 587817**

(43) Date of publication of application:
**14.10.1998 Bulletin 1998/42**

(73) Proprietor: **Wayne Pigment Corporation**
**Milwaukee, WI 53204 (US)**

(72) Inventor: **SINKO, John**
**Glendale, WI 53209 (US)**

(74) Representative: **MacGregor, Gordon et al**
**Eric Potter Clarkson,**
**Park View House,**
**58 The Ropewalk**
**Nottingham NG1 5DD (GB)**

(56) References cited:
**US-A- 4 329 381**
**US-A- 4 707 405**
**US-A- 5 176 894**
**US-A- 5 314 532**
**US-A- 5 378 446**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).



Printed by Jouve, 75001 PARIS (FR)

## Description

## Field of Invention

The present invention relates to compositions and processes for inhibition of corrosion of metals.

## Background of the Invention

Atmospheric corrosion of metals is the most visible form of occurrence of the spontaneous process fueled by $O_2$, $H_2O$ and various airborne pollutants always present in industrial or urban environments.

Among numerous alternatives for corrosion preventive techniques, organic protective coatings are certainly the most versatile and economical. Structurally, corrosion inhibitive primers are solid composites, comprising finely divided, usually multi-component, inorganic pigment phases dispersed into continuous organic polymer phases, which are strongly adherent to the protected metal substrates.

Although all physical characteristics relevant to primers' protective performance are reinforced by the dispersed inorganic pigment phase, they nevertheless remain permeable to $O_2$, $H_2O$ and air-born pollutants.

As a consequence, organic coatings do not prevent atmospheric corrosion of metals, unless they are specifically formulated with active corrosion inhibitor pigment constituents, included in the pigment phase.

Contrary to appearances, a metal substrate-protective primer, in equilibrium with its environment is a dynamic medium: it accommodates several concurrently occurring physical and chemical processes, in which water, always present due to the resin phase's permeability, plays a critical role.

Coatings' water contents are variable, a function at any time of the resin components' chemical compositions, formulation parameters and humidity of the surrounding air. Under condensing humidity conditions, this moisture content reaches a maximum value determined by pertinent formulation parameters.

Water content affects the physical integrity of organic coatings in several ways. Most importantly, it promotes hydrolytic degradation of the resin phases, dissolves all soluble components (inclusive of pigments) to saturation concentrations and supports *in situ* diffusional transport processes of dissolved constituents.

Water accumulates preferentially at metal-coating interfaces, causing loss of interfacial adhesion and more specifically supporting the electrochemical processes of metal corrosion. Paradoxically, in actively pigmented organic coatings water supports the inhibition of metal substrates' atmospheric corrosion, as well, by *in situ* solubilization of active pigments. Further, by diffusion, active species are transported toward both interfaces and made available for corrosion inhibition at metal- coating interfaces.

Considering the dynamic nature of atmospheric corrosion, effective inhibition performance requires a critical minimum or higher concentration of inhibitor species, continuously supplied to the substrate-coating interfaces. Evidently, substantial but limited solubility is a critical property of active corrosion inhibitive pigments, functionally as important as chemical composition and related molecular structure. Consequently, inhibitor pigment constituents of protective primers can be regarded as built in reservoirs of corrosion inhibitive species.

Electrochemically active corrosion inhibitor pigments generally used for Fe, Al, or Cu protection, belong exclusively to only a few generic types of inorganic materials, such as chromates, phosphates, molybdates, borates, silicates and phosphites of Zn, Ca, Sr, Ba, Al, Mg, Pb, Cr, Fe, or diverse combinations of the same. Transition metal derivatives of hydrogen cyanamide, particularly ZnNCN are also known for pigment grade application, limited, however, to special mirror backing coatings intended for Ag protection.

The active inhibitor species generally are the anionic constituents. The cations present, however, determine important physical properties of such pigments, i.e: solubility or kinetic availability of the effective species.

Chromates and particularly $SrCrO_4$. (characterized by desirable combination of relatively high $CrO_4^{-2}$ content and optimal solubility) are regarded in the art, as being the most versatile, being compatible with all vehicles, highly effective on all metal substrates, and thus being effective, although toxic, pigment grade corrosion inhibitors.

It is the redox activity of chromate species, accountable for their inhibitive efficiency, which allows interference with both anodic and cathodic corrosion processes. As a consequence, chromates are considered anodic-cathodic or "mixed" type inhibitors. A direct result of Cr(VI) reduction by corrosion processes, the formation of Cr(III) species *in situ* of metal substrates' protective oxide layer is a distinctive feature of chromates corrosion inhibitive mechanism.

In contrast with chromates, all the other above specified active corrosion inhibitive pigments, and more specifically the pertinent anionic constituents of phosphates, molybdates, silicates, borates, phosphites and cyanamides are "redox inactive" under normal conditions of metal corrosion. Consequently they do not qualify as electrochemically active materials in that sense.

A characteristic feature of "redox inactive", so called "anodic" pigments' inhibitive mechanism is the related anionic species' limited ability to interfere, restricted exclusively to anodic corrosion processes, which presumably include insoluble precipitate formation, involving anodically solubilized metal cations. There are far reaching consequences of anodic pigments' less efficient corrosion inhibitive mechanism. In this sense, generally, it can be stated, that pigment grade anodic corrosion inhibitors are qualitatively inferior, less effective and versatile, but, however, non-toxic alternatives to the chromates.

In contemporary industrial practice pigment grade non-toxic alternatives to chromates enjoy commercial acceptance, limited practically, however, to applications intended for iron or steel protection. This situation also applies to diverse, multi-phase pigment systems which contain various combinations of anionic and cationic species as above disclosed.

In view of these considerations, it can be concluded that expectations regarding development of effective, non-toxic inorganic alternatives to pigment grade chromates are not justifiable.

As is well known, there is a large arsenal of organic corrosion inhibitors employed in industrial practice. These are limited, however, to gas phase and liquid medium applications. Logically, it would be expected that the same would generally be appropriate for paint and coating applications, as well, which paradoxically is not the case. This apparent contradiction is understandable by considering that paint and coatings' related applications, in addition to corrosion inhibitive efficiency, require pigment grade qualities as well.

In addition to general quality requirements such as low toxicity, competitive price, physical and chemical stability, non-reactivity with paint systems, pigment grade quality is defined by an additional, quite limiting set of parameters. The more important of them are: non-volatility, solid consistency, specific gravity of 2.5-5.0, substantial, but limited solubility in water, virtual insolubility in organic solvents, moderately alkaline hydrolysis pH, and a lack of interference with coating curing processes. It is thus apparent that coatings-related applications are incompatible with physical properties such as volatility and excessive solubility in water or organic mediums which are critical requirements, respectively, of gas phase or liquid medium related applications of organic corrosion inhibitors.

Diverse organic compounds, such as nitrogen-containing heterocyclic mercapto derivatives, i.e: 2-mercaptobenzothiazole (hereinafter "MBT"), are well known corrosion inhibitors, employed practically exclusively in dissolved form, as functional components of aqueous, polar organic or hydrocarbon-based liquid systems. Topical applications of organic corrosion inhibitors in water, polar organic solvents or hydrocarbons include heat exchangers, anti-freeze systems, steam condensers, hydraulic oils, or metal cutting liquids lubricants. Water soluble, related sodium or potassium salts (as for example Na-MBT) or "thio" compounds in their more hydrocarbon soluble acidic form (such as MBT) are preferred in many of these latter applications. However, the aforementioned applications are not paint or protective coating related and are not intended for control of atmospheric corrosion.

U.S. Patent No. 4,329,381 (1982) discloses the use Pb or Zn salts of selected, five or six membered, nitrogen-containing organic heterocyclic mercapto derivatives, as additives to paint and coating formulations intended for anti-corrosion protection of metals, particularly of iron or steel. More specifically, the aforementioned selected heterocyclic compounds include, among others, Pb or Zn salts of mercaptobenzothiazole, mercaptopyridine, mercaptothiazole and mercaptotriazine derivatives, employed in preferred concentrations of 1-3% by weight of the paint formulations.

Several examples given in the '381 patent are based on one modified medium oil alkyd paint formulation of about 39% PVC, containing usual ratios of organic solvents, driers, filler pigments (talc, $TiO_2$, $BaSO_4$) and, more importantly, in one particular case, 2.3% by weight of $Zn(MBT)_2$. Further examples disclose comparative experimental data regarding variations of the above-specified formula. These tests involved corrosion inhibitive performance on steel, which, based on the results of limited salt spray exposure of only 200 hours, showed $Zn(MBT)_2$ to be the best performer.

Several shortcomings of the concept and procedures set forth in the '381 patent can be identified, as follows:

In respect of synthesis of MBT derivatives selected according to the patent, it will be noted, that essentially two procedures, for $Zn(MBT)_2$ preparation are disclosed:

A. "Direct conversion" into $Zn(MBT)_2$ of mixed aqueous suspension, containing ZnO, or alternatively basic zinc carbonate, and MBT, performed by extensive agitation and heating at approximately 100°C, in the presence of catalytic amounts of acetic acid.

B. By double decomposition or precipitation, using aqueous solutions of Na-MBT and of zinc salts.

As it will be demonstrated in Example 1 of the present disclosure, procedure "A", as disclosed in the '381 patent, is not practicable, generally, and especially not in relation to paint applications, for it does not yield a reasonably pure $Zn(MBT)_2$ as is necessary. Rather a mixture containing quite high ratios of unreacted MBT and ZnO results. This is explicable by the diffusionally controlled, heterogeneous nature of the process, which, even if ZnO of high specific surface area is employed, obstructs the raw materials' total conversion and is basically accountable for the presence of MBT in technical grade $Zn(MBT)_2$ produced by this process.

It is interesting to observe that $Zn(MBT)_2$ formation by direct conversion, which occurs according to:

$$ZnO + 2\ MBT \rightleftarrows (1\text{-}x)\ Zn(MBT)_2 + 2xMBT + x{\cdot}ZnO + (1\text{-}x)H_2O \qquad \mathbf{(1)}$$

a heterogenous reaction, wherein the reaction mixture's equilibrium composition is primarily controlled by the ZnO phase specific surface area. In that respect, it was learned, pursuant to the present invention, that if the required ZnO/MBT = 1/2 molar ratio is applied, then x >> 0, even if ZnO of high specific surface area is used and the equilibrium reaction mixture contains substantial amounts of unreacted MBT and ZnO.

As subsequently demonstrated in Example 1 hereof, technical grade $Zn(MBT)_2$ prepared according to procedures proposed by the '381 patent could have Zn contents practically corresponding to $Zn(MBT)_2$ chemical composition and paradoxically, at the same time, high MBT contents, detectable by IR spectroscopy. For example, if x = 0.2 according to Reaction 1., the correspondent reaction mixture contains 4.0% ZnO, 16.6% MBT and it is characterized by Zn = 16.28% (in comparison with Zn = 16.35% in pure $Zn(MBT)_2$).

Experimental data obtained pursuant to the present invention are consistent with these considerations: aqueous mixed suspension of highly reactive ZnO (such as AZO-66 from American Smelting and Refining Co. with specific surface area value of 4.7 Sq.m./g., average particle diameter of 0.25 micron) and MBT in 1:2 molar ratio, processed at 95-100°C for 2.5 hours and intense agitation, yields a reaction mixture containing Zn = 16.41% and 32.7% of unreacted MBT. (See Table 1.1.) The obtained products' MBT content was estimated by IR spectroscopy, which, by an intense absorption band situated at 1496 and 1425 $cm^{-1}$ of the related spectrum, characteristic for MBT, confirmed the presence of the same. Notably, the absorption bands characteristic for $Zn(MBT)_2$ are situated at 1369 and 543 $cm^{-1}$ (see Fig. 1).

Quantitative determination of unreacted MBT contents were performed by repeated extraction in ethanol and gravimetric evaluation of the consecutively filtered and dried samples. $Zn(MBT)_2$ and unreacted ZnO contents were calculated, considering related, experimentally determined Zn and unreacted MBT contents. Pertinent analytical data are presented in Table 1.1.

Similar conclusions are applicable with respect to the alternative procedure specified by the '381 patent, namely $Zn(MBT)_2$ preparation by double decomposition (precipitation), according to:

$$2Na\text{-}MBT + Zn(X)_2 + 2x{\cdot}H_2O =$$

$$(1\text{-}x){\cdot}Zn(MBT)_2 + 2x{\cdot}MBT + x{\cdot}Zn(OH)_2 + 2NaX, \qquad \mathbf{(2)}$$

where x > 0, and where X = $Cl^-$, $NO_a^-$, etc.

It was found experimentally, according to the present invention, that such product, produced pursuant to the recommendations of the art, contains large amounts of unreacted MBT (see 1.3 of Example 1 and Table 1.1) detectable by IR spectroscopy. It is assumed, that concurrent hydrolysis reactions of $Zn^{++}$ and MBT-species are accountable for it. (See Fig. 2.)

The above disclosed considerations regarding purity of technical grade $Zn(MBT)_2$, and more specifically the unreacted MBT content, have limiting implications in respect of applicability of such materials in paint formulations, as subsequently presented.

The '381 patent promotes the concept of employing Pb and Zn salts of diverse organic compounds, notably $Zn(MBT)_2$, as corrosion inhibitor components of organic coatings, more specifically by formulating such compounds as finely divided, distinct solid phases into related paint systems. A significant limitation of this concept observed pursuant to the present invention, is that technical grade $Zn(MBT)_2$ (produced according to any of the above identified procedures), when formulated as a finely divided, distinct solid component in paint systems, interferes with and inhibits the curing process of oil alkyd resin based coatings. Remarkably, it is estimated that about 60% of all primers intended for metal protection are oil alkyd resin based.

Supporting experimental data, pertinent to solvent based medium oil alkyd and chain-stopped water reducible short oil alkyd resin based paint formulations, are presented in Example 1. Notably, it was experimentally proven, that curing of short oil alkyd paint applications, performed at 70°C for 30 minutes, is inhibited by very low concentrations of 0.2 to 0.3 weight per cent MBT, which observation is consistent with the foregoing statements. Thus, it is plausible that technical grade $Zn(MBT)_2$, which commonly contains in excess of 10 weight % of un-converted MBT, at a generally low concentrations of 2.5 to 3.0% by weight, could inhibit the curing process of such paint systems.

As for the chemical mechanism of the curing process's inhibition, it is known that alkyd resins, both solvent or water reducible, are cured by oxygen supported radicalic mechanism, promoted usually by Co, Ca, Pb, or Zr based dryers. Thus, it is plausible that the free radical scavenging ability of MBT, probably related to the -SH functional group's known oxidizability, is accountable for it. In this respect it will be noted again, that apparently, MBT is present in considerable amounts in any technical grade $Zn(MBT)_2$ unless the latter product is specifically purified, which is generally

not the case.

Relevant solubility data indicate that MBT is quite soluble in organic solvents typically present in oil alkyd based paint formulations. Solubility values, as g/100g, are: 10.0; 2.0; and 1.0 in acetone, ethanol and benzene, respectively. Consequently, it is assumed, that the MBT content of technical grade $Zn(MBT)_2$ is solubilized by liquid phases of related paint systems and thus causes unwanted curing inhibition. Furthermore, considering that the presence of -SH functional groups, in addition to thiols, provides similar free radical scavenging capacity to several thio-organic compound families such as derivatives of dithio-carbonic and dithio-phosphoric acids, the above outlined limitation should be extended to those materials, as well.

Generally, technical grade heavy metal salts, and more specifically zinc salts of diverse organic compounds containing -SH functional groups, due to the presence of un-neutralized such species, if applied according to the recommendations of the '381 patent, are expected to display inhibitive activity in respect to radicalic curing processes which are typical for alkyd resin based coatings.

An additional limitation of the '381 patent relates to the fact that the specific gravity of $Zn(MBT)_2$ (1.5-1.7) is quite low in comparison with such values typical for other components of a paint system's dispersed inorganic phase, which range from 2.5 to 5.0, or with density values of cured coatings of about 2.0.

As is known, shelf-stable paint systems dispersed solid phases, usually multi-component constituents of the same, tend to segregate by "flooding", if they contain components with appreciably different specific gravity values. Caused by convective processes related to solvent evaporation, flooding occurs during the curing period of freshly applied coatings, resulting in predominant accumulation, at the coating-air interface, of the dispersed solid phase's low specific gravity components and ultimately, in an anisotropic composition of the resultant coatings.

Observing that low specific gravity values are typical for zinc salts formed by relatively "bulky" organic moieties, such as $Zn(MBT)_2$, it is considered that segregation by flooding has relevance to the application of such compounds as paint additives and constitutes a considerable shortcoming of the concept promoted by the '381 patent.

## Summary of Invention

According to the present invention, there is provided a corrosion-inhibiting composition for application to a metal substrate according to claim 1.

It is a principal object of the present invention to provide corrosion inhibitors for metals which avoid the foregoing problems related to inhibition of paint and coating curing processes.

In accordance with an important aspect of this invention, the above discussed limitations related to the preparation, consequent curing process inhibitive activity and comparatively low specific gravity of thio-organic zinc salts, specifically of $Zn(MBT)_2$, among others, are eliminated, by synthesis and employment, of pigment grade organic-inorganic hybrid materials.

It was learned pursuant to the present invention, that technical grade $Zn(MBT)_2$ purified by solvent extraction with ethanol at approximately a 1:3 solid-liquid ratio, does not display the same inhibitive activity even at considerable higher concentrations of > 10% by weight.

It is the organic-inorganic interface, formed concurrently with the constituent organic and inorganic phases, which is the characteristic structural feature of hybrid materials obtained pursuant to the present invention. As a consequence, the organic and inorganic solid phase constituents, interfaced at a crystallite level, form unitary hybrid materials, which display typical uniphase behavior in respect of physical properties, critical in paint applications.

Most typically in this sense, in contrast with multi-phase organic-inorganic mixtures, finely divided pigment grade hybrid materials of the present invention do not segregate in phase components by physical procedures such as flotation or flooding. Furthermore, as a direct consequence of pigment grade hybrid material's uniphase behavior, pertinent specific gravity, pH and solubility values are approximately weighed averages of the phase components' characteristic values. In this sense, it will be observed, that pigment grade hybrid materials' pH, measured in saturated leachets of the same, are the result of the phase components' acid-base interaction occurring at an intra-granular level. In similar fashion, measured solubilities are cumulative values.

It is particularly important to note, that pigment grade hybrid materials according to the present invention, and particularly those containing $Zn(MBT)_2$, do not display cure inhibitive activity in alkyd resin based paint systems. Consequently, they are actual pigment grade materials, compatible with all paint vehicle systems, as documented hereinafter.

More importantly, however, pigment grade hybrids produced according to the present invention display synergistic behavior with respect to metal corrosion inhibition.

Manifestations of pigment grade hybrids' synergistic behavior are their ability to effectively retard all of the important metals' corrosion, particularly of Fe, Al, Cu and Ag, as well as their compatibility with all paint vehicle systems, inclusive of water reducible and solvent based alkyds. More specifically, effective corrosion inhibition and synergistic behavior is understood as the capacity of pigment grade hybrid materials to display, in identical coating formulations,

essentially similar or enhanced corrosion inhibitive performance in comparison with state of the art corrosion inhibitor pigments typically applied on all the above specified metal substrates. The comparison in this sense refers to all individual phase components of related hybrid compositions, as well.

In contrast, all known electrochemically active pigment grade corrosion inhibitors, which as above discussed, representing the state of the art, display some degree of substrate specific behavior. For example, chromates and particularly $SrCrO_4$, highly effective pigment grade inhibitors applicable practically on all metals (such as Fe, Al, Cu) are known to actually promote Ag corrosion and consequently are incompatible with such substrates.

Non-toxic alternatives to chromates such as phosphates, molybdates, borates, silicates and diverse combinations of the same, are valued, although less efficient inhibitors of Fe corrosion, which however, perform poorly on Al, Cu and are just as incompatible with Ag. Their industrial application is thus limited practically to anti-corrosive protection of Fe.

Pigment grade metal cyanamides and more specifically ZnNCN of salt-free quality (see my U.S. Patents Nos. 5,176,894 and 5,378,446), represent the state of art in non-lead corrosion inhibitor pigment technology recommended for Ag protection, but their industrial application is limited to the same.

## Brief Description of Drawings

Figures 1-12 are graphical prints representing IR spectra obtained from analysis of materials produced pursuant to the invention.

## Detailed Description

The synthesis of pigment grade organic-inorganic hybrid materials is preferably accomplished by combining selected constituents according to procedures which promote formation of organic-inorganic interfaces. Preferred inorganic constituents are as follows:

Cations: Zn, Al, Mg, Ca, Sr, Ti, Zr, Ce, Fe;
Anions: phosphate, polyphosphates, phosphites, molybdates, silicates and cyanamides.

Accordingly, inorganic compounds typically present in corrosion inhibitive hybrids are: $Zn_3(PO_4)_2(H_2O)_x$, x=2-4; $MgHPO_4.(H_2O)_3$, $AlPO_4$, $CaSiO_3$, Sr- or $CaMoO_4$, ZnNCN and combinations of the same.

Selected organic constituents of hybrid pigments synthesized according to the present invention are the zinc salts or alkyl-ammonium (For example: cyclohexyl-ammonium. di-cyclohexyl-ammonium, octyl-ammonium) salts of organic mercapto- and thio- compounds or their alkyl-substituted derivatives, as follows:
mercaptobenzothiazole, mercaptothiazoline, mercaptobenzimidazole, mercaptoimidazole, 2,5-dimercapto-1,3,4-thiodiazole, 5,5-dithio-bis(1,3,4-thiadiazole)-2(3H)-thione, mercaptobenzoxazole, mercaptothiazole, mercaptotriazole, mercaptopyrimidine, mercaptopyridine, mercaptoquinoline, alkyl- and cyclo-alkyl mercaptanes, N-alkyl- or N-cycloalkyl-dithiocarbamates, O-alkyl- or O-cycloalkyl-dithiocarbonates. O,O-dialkyl- and O,O-dicycloalkyl-dithiophosphates.

The preferred practical realization, of the synthesis of organic-inorganic hybrids in heterogeneous processes, is exemplified by Reaction 3 and Reaction 4, the former being an adaptation of Reaction 1, which is performed in aqueous medium and extensive heating at 85-95°C, as follows:

$$ZnO + 2xMBT \text{ ------> } x \cdot Zn(MBT)_2/(1-x) \cdot ZnO + xH_2O \qquad \textbf{(3)}$$

where x < 0.25, and ZnO is finely divided with average particle size of 0.25 micron or less.

It will be observed, that in contrast with Reaction 1, Reaction 3 is carried out with a large stoichiometrical excess of ZnO of at least 100 mole %. As a result, the equilibrium reaction mixture does not contain unreacted MBT, which, as above discussed, is one of the major objectives of the present invention.

It was further learned that the equilibrium mixture of Reaction 3, which contains $Zn(MBT)_2$ and ZnO, reacts readily with $H_2NCN$, as follows:

$$xZn(MBT)_2/(1-x)\ ZnO + (1-x)\ H_2NCN \text{------>}$$

$$xZn(MBT)_2/(1-x)ZnNCN + (1-x)\ H_2O \qquad \textbf{(4)}$$

Reaction 4, or a variation thereof, is the process generally preferred for the formation of organic-inorganic interfaces, characteristic to pigment grade hybrid materials according to the present invention. As hereinafter further disclosed, this procedure offers significant advantages, the absence of soluble by-products being one of the most important.

It is important to observe as well, that certain useful characteristics of Reaction 4 observed pursuant to the present invention, are essentially unpredictable on the basis of common theoretical considerations, as follows:

A. Reaction 4, even if performed at about 15 mole% of $H_2NCN$ stoichiometrical excess and 80-85°C, does not reverse Reaction 3 and consequently does yield pigment grade organic-inorganic hybrid material free of unreacted MBT.
B. $Zn(MBT)_2$, the final product of Reaction 3, which is present in the related reaction mixture presumably as an adsorbed layer on a ZnO core, does not obstruct the completion of Reaction 4.
C. The above specified process sequence, symbolized by

Reaction 3 ------ > Reaction 4

is reversible; it having been experimentally proven that ZnNCN in aqueous suspension reacts readily with MBT.

Notably, it was learned that attempts to produce $0.2Zn(MBT)_2$/ ZnNCN type pigment grade hybrid, essentially by reverse process sequence (see Example 1.4.1 and IR spectrum 3), yielded a product which contained no unreacted MBT, according to:

$$ZnO + H_2NCN + H2O \text{ --(85° C)--> } ZnNCN + 2H_2O \qquad \textbf{(5)}$$

$$ZnNCN + 0.\ 2\ MBT + H_2O \text{ --(heat)--> }$$

$$0.9\ ZnNCN/0.1\ Zn(MBT)_2 + 0.1\ H_2NCN+H_2O \qquad \textbf{(6)}$$

It appears reasonable to suppose that diffusing ability, affinity to form ZnNCN and the very weak acidic character ($K=4.04\ 10^{-11}$)/20°C) of H2NCN, comparative to the stronger acidity of organic thiol compounds, all contribute to the feasibility of pigment grade hybrid synthesis according to Reactions 3 and 4. It is important to emphasize, that Reaction 6, unknown by the prior art, and Reaction 4 constitute the basic chemical process of pigment grade organic-inorganic hybrid synthesis, pursuant to the present invention.

For the aforementioned reasons and also due to its appropriate solubility and corrosion inhibitive activity, ZnNCN is an irreplaceable functional component of pigment grade organic-inorganic hybrids with synergistic behavior in providing corrosion inhibition.

These considerations are supported by further observations made pursuant to incorporation of salts of stronger acids, such as $H_3PO_4$ or $H_3PPO_3$ and $MoO_3$ , into pigment grade hybrids of the present invention. For example, efforts to incorporate $Zn_3(PO_4)_2(H_2O)_2$ or $ZnMoO_4$ by introduction of $H_3PO_4$ or $MoO_3$ into the characteristic reaction equilibrium mixture of Reaction 3, have yielded pigment grade hybrids with substantial, undesired content of free MBT. It is assumed, that concurrently with zinc phosphate formation, $H_3PO_4$ (and strong acids, generally) to some extent promotes the undesirable side reaction, as follows:

$$3\ Zn(MBT)_2 + 2H_3PO_4 + H_2O \text{ -----> } Zn_3(PO_4)_2(H_2O)_{2\text{-}4} + 6MBT \qquad \textbf{(7)}$$

As a consequence, the preferred technique to incorporate all constituents of a multi-component hybrid pigment of $0.2Zn(MBT)_2$/ZnNCN/0.2 zinc phosphate/0.5-$CaSiO_3$ phase composition formula, can be represented as follows:

A. Reaction 3 is performed at x = 0.2;
B. Reaction 8 is performed separately on a mixed suspension of ZnO and $CaSiO_3$, as follows:

$$ZnO/0.5CaSiO_3 + 0.53H_3\ PO_4 + H_2O \text{ --(ambient temp.)---> }$$

$$0.2ZnO/0.26Zn_3(PO_4)_2(H_3O)_4/0.5CaSiO_3 \qquad \textbf{(8)}$$

C. equilibrium mixtures of Reaction 3 and Reaction 8 are mixed together;

D. ZnNCN is incorporated by H2NCN addition:

$$\text{(Equilibrium mixture of Reaction 3 + 8) + H2NCN -- (ambient temp.)---->}\ 0.2Zn(MBT)_2/ZnNCN/0.26Zn_3(PO_4)_2(H2O)_4/0.5CaSiO_3 + H_2O \quad \textbf{(9)}$$

It is particularly interesting to observe, that, quite unexpectedly, the ZnO component of the equilibrium mixture of Reaction 8 (presumably present as zinc phosphate coated core) is available for reaction with $H_2NCN$; the case is specifically documented in Example 17.1.

Naturally occurring Wollastonite or $CaSiO_3$ is preferred for incorporation of silicate species into pigment grade hybrids .

As for molybdate species, it is comfortable to produce Zn-, Ca- or Sr-molybdate without soluble by-products, by reacting $MoO_{3-}$ with ZnO, $Ca(OH)_2$ or preferably $Sr(OH)_2$, according to the following:

$$Sr(OH)_2 + MoO_3 + H_2O \text{ -----> } SrMoO_4 + 2H_2O \quad \textbf{(10)}$$

Reaction 10 is preferably performed as a variation of Reaction 8, wherein $Sr(OH)_2$ (or alternatively, $Ca(OH)_2$) is a partially soluble component of the reaction precursor (a mixed suspension of ZnO and $CaSiO_3$) and $MoO_3$ introduction precedes or is performed concurrently to $H_3PO_4$. The phase composition of a such typical multi-component hybrid pigment can be represented by the following formula:

$$0.2Zn(MBT)_2/ZnNCN/0.25Zn_3(PO_4)_2(H_2O)_4/0.5CaSiO_3/0.2SrMoO_4$$

An alternative procedure for synthesis of multi-component, organic-inorganic hybrid pigments involves co-precipitation by double decomposition of mixtures of soluble salts, containing the above specified selected anionic and cationic species.

Accordingly, soluble salts of organic thiol derivatives and mercaptans are co-precipitated selectively as Zn-derivatives, allowed by the rule of solubility, with phosphates, molybdates, phosphites, poly-phosphates and cyanamides of Zn, Al, Ca, Sr, Mg, Ti, Zr and Ce. Cyanamide species are selectively precipitated as ZnNCN, pursuant to the present invention. Formation of soluble by-products constitutes, however, a severe limitation of the latter procedure, for it requires extensive washing of the synthesized pigments.

The application of coprecipitation by double decomposition however, is inevitable in cases of thiol-organic compounds which are not available in an acid form, such as derivatives of dithio-carbonic and dithio-phosphoric acid. In order to minimize the inconvenience caused by of by-products formation, coprecipitation by double decomposition is preferably employed in combination with the earlier disclosed heterogeneous procedure, as exemplified below.

For example, the synthesis of a five component pigment grade hybrid is accomplished according to a combined procedure as follows:

A. An aqueous suspension of $Sr(OH)_2$, ZnO and Wollastonite is treated with $MoO_3$ and $H_2NCN$ according to the heterogeneous process:

$$ZnO+0.5CaSiO_3+0.2Sr(OH)_2+0.2MoO_3+H_3NCN+H_2O \text{ -(70-85° C)-->} ZnNCN/0.5CaSiO_3/0.2SrMoO_4+2.2H_2O \quad \textbf{(11)}$$

B. Without solid-liquid phase separation, the equilibrium mixture of Reaction 11 is further processed by co-precipitation of mixtures of selected anionic and cationic species, such as $PO_4^{3-}$, $NCN^{2-}$, thio-organic compounds (as sodium salts) and $Zn^{2+}$, $Al^{3+}$ (usually as nitrates), respectively:

$$(Reaction\ 11\ product) + [0.4 \text{o} DT^{-} + 0.5 \text{o} NCN^{2-} + 0.5° PO_4^{3-}] + 2.9Na^{+} + 1.45\ Zn(NO_3)_2 \text{ --(70-85° C)--> } 0.2Zn(DT)_2 / 1.5ZnNCN/0.5CaSiO_3/0.2SrMoO_4/ 0.25Zn_3(PO_4)_2(H_2O)_4 + 2.9\ NaNO_3 \quad \textbf{(12)}$$

where DT symbolizes thio-organic compounds, such as O,O-di-alkyl-dithiophosphates, O-alkyl-dithiocarbonates, N-alkyl-(or N-aryl-) dithiocarbamates or mercaptans. It will be noted, that alkyl-ammonium salts of mercapto derivatives, as for example di-cyclohexylammonium-2-mercaptobenzothiazolate, are preferably incorporated into hybrid compositions as aqueous suspensions.

The following examples demonstrate the feasibility of synthesis procedures according to the present invention, to produce pigment grade organic-inorganic hybrid compositions. The experimental evidence also demonstrates the same materials' synergistic behavior in respect to inhibition of corrosion in commercially significant metal substrates including iron, steel, silver, copper and aluminum. Other aspects of the invention also will be further illustrated by the following examples, wherein all percentages are given by weight unless otherwise indicated.

## Examples

Experimental data presented under Example 1 are intended to demonstrate the above specified limitations of the concept and practice promoted by U.S. Patent No. 4,329,381.

## Comparative Example 1

Preparations of varieties of technical grade Zn-2-mercaptobenzothiazolate were performed pursuant to the recommendations of the above identified '381 patent, following procedures essentially known by the art.

1.1. In order to obtain $Zn(MBT)_2$ by "direct conversion", a well dispersed and hydrated, highly reactive suspension of ZnO was prepared, by introducing 1.0 moles of such product (AZO 66 grade, with an average particle size of 0.25 micron, from American Smelting and Refining Co.) into 500 ml of intensively stirred hot water (80-85 °C) and keeping the same conditions for 1 hour.

Concurrently, aqueous suspension, containing 2.0 moles of finely ground MBT in 1000 ml. water, (341.2 g. of 98%, available from Aldrich Chemical Co.) was prepared in similar fashion, using however a substantially small, but effective amount of non-ionic surfactant (Igepal-CA 630, distributed by Hydrite Chemical Co., WI). The "conversion" process was performed by the ZnO suspension's gradual introduction into the MBT suspension, 25g of glacial Acetic acid addition (as catalyst), and intense agitation of the reaction mixture at 98-100°C for 2.5 hours. Subsequently, the solid phase of the resultant suspension was separated by filtration, dried at 105-110°C overnight and pulverized to a fineness of 100% +270 mesh. Pertinent analytical data are presented in Table 1.

1.2. Preparation of $Zn(MBT)_2$ by converting a mixed suspension, containing basic zinc carbonate and MBT, was performed in identical fashion as above described, except that no glacial acetic acid was used and the previously obtained ZnO suspension was first converted into basic zinc carbonate suspension, by cooling it to about 40°C and introducing continuously into it for about 1 hour, $CO_2$ gas at a manageable rate and intense agitation.

Related analytical data are presented below.

1.3. Technical grade $Zn(MBT)_2$ by "precipitation" was produced according to the following:

Aqueous solutions of 1.0 mol $ZnSO_4$/1000 ml at pH= 4.0-4.3 and of 2.0 mol. Na-MBT /1000 ml were prepared, using high purity ZnO and technical grade MBT with 98% assay. Particularly, the latter solution was obtained by adding, in small increments, 341.2g of MBT and 81.0g NaOH into intensively stirred 800 ml of water at ambient temperature and subsequently completing the volume of the solution. Technical grade $Zn(MBT)_2$ was precipitated by introducing the above solutions, simultaneously at identical delivery rate (in about 30 min.), into well agitated 300 ml. of water, at ambient temperature. After 1 hour of stirring at that temperature, the obtained slurry was filtered, washed intensively to salt-free conditions and further processed in identical fashion, as disclosed above. Related analytical data are presented below.

1.4. Purified grade $Zn(MBT)_2$, containing no unreacted MBT, was produced by solvent extraction. For that purpose, 200.0g of technical grade $Zn(MBT)_2$ (produced by precipitation according to 1.3) was suspended in 600 ml. of 98% ethanol, stirred intensively for 30 min. at about 45° C, filtered, dried overnight at 105°C and pulverized. Related analytical data are presented below. 1.4.1 Pigment grade hybrid of $0.2ZN(MBT)_2$/ 0.8ZnNCN composition, was synthesized according to Reaction 6 of the present invention and the following procedure:

Aqueous ZnO slurry, containing 1.0 moles (81.38 g.) of AZO 66 grade such product in 500 ml. $H_2O$, was prepared by intense agitation of the suspension at 80-85°C, for one hour. Keeping the reaction conditions the same, ZnO suspension was converted into ZnNCN suspension (following applicable procedure according to my U.S. Patent 5,176,894), by introducing into it in about 15 min., 1.1 moles (46.5 g) of $H_2NCN$ as aqueous solution of 25%. After processing it for one hour in the same conditions and without solid liquid separation, the ZnNCN suspension was subsequently converted into pigment grade hybrid suspension (as specified), by introduction of aqueous suspension, containing 0.2 moles (34.0 g.) of finely ground 2-mercaptobenzothiazole. The conversion process according to Reaction 6, was finalized by intense agitation of the suspension, at 85-90°C for 2.5 hours and finally, the filtered solid phase, dried overnight at about 100°C, was subsequently pulverized to + 325 mesh fineness.

Pertinent analytical data are as follow: % ZN = 47.8; % NCN = 22. 6; Yield = 135.0 g;

Notably, the related IR Spectrum presented in Fig. 3, indicates that the product does not contain unreacted MBT. It is important to observe, that test results presented below in Table 1.3 support the above statement: pigment grade hybrid of 0.2oZNz$(MBT)_2$/0.8ZnNCN, synthesized according to the present invention, does not possess cure inhibitive activity.

Table 1.1

| Quality parameters of $Zn(MBT)_2$ varieties | | | | |
|---|---|---|---|---|
| **Determined parameters:** | **Produced/Example No.** | | | |
| | **1.1** | **1.2** | **1.3** | **1.4** |
| **Zn%** | **16.41** | **14.6** | **18.32** | **20.53** |
| **MBT%, (unreacted)** | **32.7** | **40.4** | **13.2** | **~0** |
| **ZnO% ,(calculated)** | **17.1** | **15.1** | **22.0** | **25.4** |
| **$Zn(MBT)_2$% ,(calculated)** | **50.3** | **44.5** | **64.7** | **74.6** |
| **Carbonate as CO2%** | **-** | **1.0** | **-** | **-** |
| **Specific gravity** | **1.67** | **1.62** | **1.71** | **1.60** |
| **pH, (aqueous leachet)** | **6.5** | **6.6** | **6.6** | **7.5** |
| **Yield, g.** | **412.0** | **-** | **418.0** | **173.6** |

IR spectra of $Zn(MBT)_2$ produced according to 1.1 and 1.3 are presented in Figs. 1 and 2, respectively.

1.5. In order to evaluate the cure-inhibitive activity of various technical grade $Zn(MBT)_2$ samples produced according to 1.1.-1.4., solvent-based medium oil alkyd (1.5.1.) and water-reducible, chain stopped short oil alkyd resin based paint formulations (1.5.2.) were employed, as subsequently presented.

Table 1.2.

| **Components of Formulations** | **Trade Names & Suppliers of Components** | **Parts by Weight** | |
|---|---|---|---|
| | | **1.5.1** | **1.5.2** |
| **Filler pigment** | **Red iron oxide 1646 (1)** | **31.0** | |
| | **Talc 40-27 (2)** | **268.0** | |
| | **Carbon Black (3)** | **-** | **13.5** |
| **Solvent** | **Xylene** | **128.5** | **-** |
| | **Water** | **-** | **500.0** |
| **Co-solvent** | **Glycol Ether EB** | **-** | **25.5** |
| | **sec.-butanol** | **-** | **25.5** |
| **Anti-setting agent** | **MPA-1078X (4)** | **5.5** | **-** |
| **Anti-skining agent** | **Methylethylketoxime** | **2.2** | **-** |
| **Neutralizer** | **Dimethylethanol amine** | **-** | **3.0** |
| **Resin** | **Duramac 2455 (5)** | **503.5** | **-** |
| | **Kelsol 3962 (6)** | **-** | **310.0** |
| **Driers** | **Noury (7)** | | |
| | **Cobalt, 6% Co** | **2.2** | **4.2** |

Table 1.2. (continued)

| **Components of Formulations** | **Trade Names & Suppliers of Components** | **Parts by Weight** | |
|---|---|---|---|
| | | **1.5.1** | **1.5.2** |
| | **Zirconium, 6% Zr** | **21.0** | **-** |
| | **Manganese, 6% Mn** | **-** | **9.3** |
| | | **961.9** | **891.0** |

Raw material suppliers: (1) U.S.Oxides; (2) Pfizer Inc., Chemical Div.; (3) Columbian Chemical Co.; (4) Rheox, Inc.; (5) McWhorther Technologies; (6) Reichold Chemicals, Inc.; (7) Interstab Chemicals, Inc.;

1.6. Curing inhibitive activity of technical grade $Zn(MBT)_2$ varieties, synthesized pursuant to 1.1-1.4 and of technical grade MBT, was evaluated by determining the minimum concentration of the above materials, necessary to inhibit the curing process of solvent and aqueous alkyd resin based paint formulations, according to 1.5.1 and 1.5.2, respectively.

For that purpose, $7.6 \times 10^{-3}$ cm (3 mil) thick applications of the above paint formulations, containing variable amounts of $Zn(MBT)_2$ varieties, were applied on draw-down boards, subsequently dried at 70°C for 30 minutes and evaluated for cure; tack-free applications were considered cured. $Zn(MBT)_2$ varieties' cure inhibitive activity was estimated by observing the pertinent minimal concentration necessary for partial cure inhibition. Data are presented below.

Table 1.3

| Tested Technical Grade Zn(MBT)2 wght.% Varieties and MBT | | Inhibitive Concentration, (minimal) / paint system | |
|---|---|---|---|
| | 1.5.1 | 1.5.2 | Observation |
| 1.1. | 0.25-0.5 | - | strong Inhibition |
| 1.2. | 0.3 -0.4 | - | " |
| 1.3. | 0.25-0.5 | ~2.5 | " |
| 1.4. | >> 10.0 | ~10.0 | NO INHIBITION |
| 1.4.1 | >> 4.0 | - | NO INHIBITION |
| MBT | 0.25-0.5 | < <2.5 | strong inhibition |

As observable, all technical grade $Zn(MBT)_2$ varieties, inclusive 1.3. the one produced by precipitation, and MBT, display cure inhibitive activity in solvent based alkyd systems, at very low concentration range of 0.3-0.5 weight %; in comparison, purified $Zn(MBT)_2$ does not present such activity even at > 10.0 weight % concentration.

Tested materials display similar behavior in water reducible alkyd systems, at higher minimum inhibitive concentration, however.

**EXAMPLES OF EMBODIMENTS OF THE PRESENT INVENTION.**

All examples of realization hereafter presented, disclose manufacturing procedures and pertinent chemical compositions of pigment grade organic-inorganic hybrid compounds obtainable pursuant to the present invention; experimental data regarding applicability of the formers in various and more specifically, in alkyd based paint systems as well as regarding their synergistic behavior in respect of corrosion inhibition, are also presented.

Example 2.

Pigment grade, organic-inorganic hybrid material, characterized by synergy in respect of Ag, Cu, Al, Fe corrosion inhibition and symbolized by phase-composition formulas:

2.1. $0.05Zu(MBT)_2/ZnNCN$,

and

2.2. $0.05Zn(MBT)_2/ZnNCN/0.5CaSiO3$

where 2.1.contains about 17% by weight of $Zn(MBT)_2$, were produced according to the following procedures:

To synthesize 2.1, highly reactive, hydrated and finely divided ZnO suspension was prepared by introducing 1.0 mole of ZnO (AZO 66 grade, characterized by 0.25 micron average particle size, assay: > 99.9%, from American Smelting and Refining Co.) into 500 ml. of hot water, with intensive agitation. The dispersion and hydration process was completed by maintaining the same conditions (85-90°C)for one additional hour.

Concurrently, aqueous suspension of MBT, (technical grade 98% 2-Mercaptobenzothiazole, available from Aldrich Chemical Co.) was obtained in similar fashion, containing 0.1 moles (17.0 g. of 98%) of the same in 200 ml. of water at ambient temperature, using, however, a small but effective amount of non-ionic surfactant (Igepal-CA 630, distributed by Hydrite Chemical Co., WI.)as a wetting aid.

By introducing the latter suspension into the former, a mixed suspension was formed and converted, at 85-90°C and intense agitation for 2.5 hours, into a $Zn(MBT)_2$-ZnO suspension. Subsequently, pigment grade hybrid material, according to the above specified phase-composition, was produced by introducing in about 30 min. into the reaction mixture, 1.05 moles of $H_2NCN$ (as aqueous solution of 50 weight %, available from S.K.W., Germany) and keeping the same conditions (80-85 °C, intense agitation) for one hour. The resultant product suspension's solid phase was separated by filtration. The presscake, without washing, was dried at 105-110°C for 12 hours and pulverized to a fineness of 100% +270 mesh.

Organic-inorganic hybrid pigment according to phase-composition formula 2.2, was synthesized, in identical fashion as disclosed for Example 2.1, with addition of a mixed suspension of 1.0 moles (81.38 g.) ZnO and 0.5 moles (58.0 g.) Wollastonite grade CaSiO3 in 1000 ml. Of water. (See Example 3 for specific data regarding $CaSiO_3$).

Pertinent analytical data and IR spectra characteristic to Example 2.2 are presented in Table 2 and Fig. 4, respectively.

Table 2.

| **Measured Parameters** | **Determined Values** | |
|---|---|---|
| | **2.1.** | **2.2.** |
| **Appearance** | **white powder** | |
| **Zn totak, %** | **55.60** | **32.8** |
| **NCN %** | **29.88** | **19.1** |
| **pH (ASTM D-1208-81/6.1.1)** | **8.3** | **8.7** |
| **Specific Gravity** | **2.74** | **2.7** |
| **Oil absorption, lbs/100 lbs: (ASTM D-281-84) 34** | **32** | |
| **Yield, g.** | **114.3** | **181.5** |

Example 3

Pigment grade, organic-inorganic hybrid materials, characterized by corrosion inhibitive properties similar to Example 2 and symbolized by phase-composition formulas:

3.1. $0.05\ Zn(MBI)_2\ /\ ZnNCN\ /\ 0.5\ CaSiO_3$

3.2. $0.05\ Zn(MTH)_2\ /\ ZnNCN\ /\ 0.5\ CaSiO_3$

where $Zn(MBI)_2$ and $Zn(MTH)_2$ stand for zinc salts of 2-Mercaptobenzimidazol or 2-Mercaptothiazoline, respectively (both materials are commercially available with assays of 98% from Aldrich Chemicals Co.) were obtained according to the procedure as follows:

Mixed suspension, containing 160.0 g $CaSiO_a$ (NYAD 1250 grade Wollastonite from NYCO Minerals Inc.) and 224.0 g. (2.75 moles) of ZnO in 2500 ml. $H_2O$, was prepared in similar fashion as described in the applicable part of Example 2, at lower temperature however, of 65 - 85°C.

Subsequently, hybrid pigment varieties according to 3.1. and 3.2. were produced by introducing into the mixed suspensions of $CaSiO_3$/ZnO, in about 15 minutes, previously prepared aqueous solutions of $Zn(NO_a)_2$ (0.15 moles as approximately 25% solution). Simultaneously with the former appropriate amounts of Na-MBI and Na-MTH. respectively were added. After one hour of intense agitation at 65-75° C, 3.0 moles of $H_2NCN$ (as 20% solution) were introduced in about 30 min. into the reaction mixture, after which, the same reaction conditions were extended for about 60 additional minutes.

Aqueous solutions of Na-MBI and Na-MTH were prepared by solubilizing 0.30 moles of 2-Mercaptothiazoline (36.5g of 98%) or 2-Mercaptobenzimidazole (46.0g of 98%), respectively, in 300 ml. $H_2O$, containing 0.30 moles of NaOH.

The conversion was finalized and the obtained composite pigments were further processed in identical fashion as presented in the applicable section of Example 2, except that the slurry was cooled to ambient temperature before performing solid-liquid separation.

Pertinent analytical data and IR spectra characterisic to Example 3.1 are presented in Table 3 and Fig. 5, respectively.

Table 3

| Measured Quality Parameters | Determined Values | |
|---|---|---|
| | 3.1. | 3.2. |
| Appearance | White powder | |
| Zn total,% | 37.2 | 43.1 |
| NCN,% | 18.71 | 16.35 |
| pH | 8.3 | 8.5 |
| Specific gravity | 2.78 | 2.98 |
| Oil absorption, lbs/100lbs | 34.0 | - |
| Yield, g. | 506.0 | 483.0 |

Example 4

Pigment grade, multi-component, organic-inorganic hybrid material, characterized by synergistic behavior in regard of metal corrosion inhibition and symbolized by phase-composition formula of

$$0.06Zn(MBT)_2 \,/\, 0.06\ Zn(MTH)_2 \,/\, ZnNCN \,/\, 0.21\ Zn_3(PO_4)_{22}H_2O$$

was produced pursuant the following procedure:

Dispersion(A), containing 138.5 g. (1.7 moles) of ZnO /1000 ml. $H_2O$ and solution (B) of 2.4 moles $ZnSO_4$/ 1500 ml., at approximately pH = 4.0, were prepared following the applicable section of Example 2. and common procedure, respectively.

Concurrently, solution (C), comprising anionic species, was prepared by dissolving 0.3 moles of each, MBT (36.5g of 98%)and MTH (51.2 g. of 98%), as well as 1.0 moles of $H_3PO_4$ in 1000 ml. aqueous solution of 4.8 moles NaOH. After cooling to ambient temperature, 0.6 moles of $H_2NCN$ were added and the volume completed to 1500 ml.

Pigment grade hybrid material, according to the above specified phase-composition formula, was produced by introducing first, in about 30 min., 1.8 moles of aqueous $H_2NCN$ and subsequently (in about 30 min.) solutions (B) and (C) (simultaneously) into intensively stirred dispersion (A); The pH of the reaction medium was observed to be 7-8.

The same reaction conditions were held for an additional 60 min. at 60-65°C and subsequently, the suspension's solid phase was separated by filtration, washed to soluble salt-free conditions and further processed in identical fashion as disclosed in the applicable section of Example 2.

Pertinent analytical data are presented in Table 4.

Table 4.

| Measured parameter | Determined value |
|---|---|
| Zn total% | 46.7 |
| NCN% | 13.6 |

Table 4. (continued)

| Measured parameter | Determined value |
|---|---|
| pH | 8.4 |
| Oil absorption. lbs/100 lbs | |
| Spec. gravity | 2.63 |
| Yield, g. | 550.0 |

Example 5.

Pigment grade, organic-inorganic hybrid material, characterized by similar corrosion inhibitive behavior as the compositions described in previous examples, symbolized by phase composition formula of

0.075 Zn-DMTD / ZnNCN

where Zn-DMTD is Zn-2,5-dimercapto-1,3,4-thiadiazolate, was produced according to the following procedure:

Highly reactive ZnO suspension (A ), containing 2.0 moles of such product in 1000 ml. of water, was prepared as described in the pertinent section of Example 2. Concurrently, solution (B) of 0.15 moles $ZnSO_4$ in 200 ml. of water and solution (C) of 0.15 moles disodium 2,5-dimercapto-1,3,4-thiadiazolate in 200 ml. of water, were obtained following common procedure, or by dissolving the appropriate amount of DMTD (available from Aldrich Chemical Co.)in aqueous solution of 0.3 moles NaOH, respectively.

Hybrid material, according to the above specified phase composition was produced by simultaneous introduction, in about 30 minutes, of solutions (B),(C) and at a comparatively higher rate, of 200 ml. of a solution containing 2.1 moles of $H_2NCN$, into intensively stirred suspension (A), at about 50-60° C. After the reactants' introduction was completed, the reaction medium's pH, if necessary, was adjusted to pH = 8.0 and the same conditions were kept for one hour. Subsequently, the obtained pigment suspension was processed in identical fashion as described in the applicable section of Example 1.

Related analytical data, IR spectra are presented below and in Fig. 6, respectively.

Table 5.

| **Measured parameter** | **Determined value** |
|---|---|
| **Appearance** | **white powder** |
| **Zn total,%** | **57.4** |
| **NCN%** | **26.6** |
| **pH** | **8.11** |
| **Sp. gravity** | **2.94** |
| **Oil absorption, lbs/100lbs** | **-** |
| **Yield, g.** | **235.0** |

Example 6.

Pigment grade hybrid material of similar characteristics as disclosed in previous examples, symbolized by a phase-composition formula of

$$0.13\ Zn(CyDC)_2\ /\ ZnNCN\ /\ 0.21\ Zn_3(PO_4)_2\ 2H_2O$$

where $Zn(CyDC)_2$ stands for Zn-(-S(S)-NH-$C_6H_{11})_2$, Zn-Cyclohexyl-dithiocarbamate, was produced in identical fashion as described in Example 4, except that solution (C), in this case contained 1.0 moles of $Na_2PO_4$ and 0.6 moles of both, $Na_2NCN$ and Na-Cyclohexyl-dithiocarbamate.

Latter was synthesized pursuant the procedure well known by the art, as follows: 0.65 moles of $CS_2$ were slowly introduced, at normal temperature, into an aqueous solution comprising 0.6 moles of cyclohexylamine and 0.6 moles of NaOH in 400 ml. water.

Pertinent analytical data and IR spectrum are presented below and Figure 7, respectively.

Table 6.

| **Measured parameter** | **Determined value** |
|---|---|
| **Appearance** | **pale yellow** |
| **Zn total %** | **49.0** |
| **NCN%** | **14.2** |
| **pH** | **7.7** |
| **Oil absorption, lbs/100 lbs** | **-** |
| **Spec. gravity** | **2.62** |
| **Yield, g.** | **270.0** |

Example 7.

Pigment grade organic-inorganic hybrid material of similar corrosion inhibitive characteristics as those described in previous examples, symbolized by the phase-composition formula of

$$0.06Zn(n\text{-}pDC)_2/ZnNCN/0.21SrMoO_4/0.1Zn_3(PO_4)_22H_2O$$

where $Zn(n\text{-}pDC)_2$ is (n-$C_3H_7$-O-C(S)S-$)_2$-Zn, Zinc-n-propyl-O-dithiocarbonate, was synthesized in identical fashion as described in Example 4, except that solution (B) and (C ), in this case contained 0.5 moles $Sr(NO_3)_2$, 1.65 moles $Zn(NO_3)_2$ /1500 ml. $H_2O$ and 0.5 moles $Na_aPO_4$, 0.5 moles $Na_2MoO_4$, 0.6 moles $Na_2NCN$, 0.6 moles Na-S(S)C-O-$C_3H_7$-n/ 1500ml. $H_2O$, respectively.

The necessary amounts of Na-n-propyl-dithiocarbonate was synthesized pursuant the procedure known by the art, as follows: into a mixture of 0.61 moles n-propanol and 0.6 moles NaOH / 100 ml. $H_2O$, 0.61 moles of $CS_2$ were gradually introduced under moderate agitation and at 40-50° C, after which the same conditions were kept for one hour; the obtained aqueous solution was subsequently incorporated into solution (C).

Pertinent analytical data are presented below. See IR spectrum in Fig.8.

Table 7.

| **Measured parameter** | **Determined value** |
|---|---|
| **Appearance** | **white powder** |
| **Zn total %** | **41.08** |
| **NCN%** | **12.3** |
| **pH** | **7.3** |
| **Oil absorption, lbs/100 lbs** | **-** |
| **Spec. gravity** | **2.84** |
| **Yield, g.** | **525.0** |

Example 8

Multi-phase pigment grade hybrid material, applicable for corrosion inhibition of Ag, Cu, Al, Fe, characterized by phase-composition formula of

$$0.05\ dCy\text{-}MBT\ /\ ZnNCN\ /\ 0.5\ CaSiO_3$$

(where dCy-MBT stands for di-cyclohexylammonium 2-mercaptobenzothiazolate) was produced according to the following procedure:

$CaSiO_3$/ZnO mixed suspension (A), containing 165.0 g. of $CaSiO_3$ and 224.0 g.(2.75 moles) of ZnO in 2000 $H_2O$, was prepared in identical fashion as described in the applicable part of Example 3.

Concomitantly, an aqueous suspension (B) of di-cyclohexylammonium 2-mercaptobenzothiazolate was produced by introducing simultaneously into 200 ml. $H_2O$, (under agitation and normal temperature conditions) 0.15 moles of Na-2-mercaptobenzothiazolate (as aqueous solution, prepared by dissolving the appropriate amount of technical grade MBT in 200 ml. solution containing 0.15 moles NaOH )and aqueous solution of di-cyclohexylammonium sulfate, previously prepared by neutralizing 27.5 g.(0.15 moles)of di-cyclohexlamine (technical grade with 98% assay, available from Aldrich Chemical Co.) in 150 ml. $H_2O$, with 0.08 moles of $H_2SO_4$.

Subsequently, pigment grade hybrid material corresponding to the above specified phase composition formula, was produced by introducing into suspension (A), under intense agitation, suspension (B) and simultaneously 3.0 moles of $H_2NCN$ (as aqueous solution of 25%), in about 30 minutes.

During (B) and $H_2NCN$ introduction, the intensively stirred reaction system's temperature was kept at 65-75°C and consecutively the conversion process was finalized under the same conditions in one additional hour.

The obtained pigment slurry was subsequently cooled to normal temperature, filtered, washed to salt-free conditions and further processed according to the applicable part of Example 2.

Pertinent analytical data and characteristic IR Spectrum are presented in Table 8 and Fig. 9, respectively.

Table 8.

| Parameter Measured | Determined value |
|---|---|
| **Appearance** | **white powder** |
| **Zn total.%** | **39.0** |
| **NCN,%** | **35.7** |
| **pH** | **8.95** |
| **Specific Gravity** | **2.72** |
| **Oil absorption, lbs/100 lbs** | |
| **Yield, g.** | **492.0** |

Example 9.

Pigment grade organic-inorganic hybrid composition, corresponding to the phase-composition formula of

$$0.05\ Zu(CyM)_2\ /\ ZnNCN\ /0.5\ CaSiO_3$$

(where $Zn(CyM)_2$ stands for $Zn(-S-(C_6H_{11})_2$, Zn-cyclohexyl-thiolate) applicable as corrosion inhibitor pigment component of paint and coating formulations intended for Ag, Cu, Al, Fe protection, was obtained in all details according to the procedure described in Example 3/3.2., except that in this case, (instead of 2-mercaptotbiazoline), 0.28 moles (33.5 g., 97%)of cyclohexyl mercaptan, (available from ELF Atochem North America, Inc.), was used.

All operations involving cyclohexyl mercaptan were performed in closed apparatus equipped with caustic scrubber.

Pertinent analytical data and characteristic IR Spectrum are presented in Table 9 and Fig. 10, respectively.

Table 9.

| Parameter measured | Determined value |
|---|---|
| **Appearance** | **white powder** |
| **Zn total,%** | **37.5** |
| **NCN,%** | **40.8** |
| **Specific gravity** | **2.57** |
| **pH.** | **8.4** |
| **Oil absorption, lbs/ 100lbs** | **-** |

Table 9. (continued)

| Parameter measured | Determined value |
|---|---|
| Appearance | white powder |
| Yield, g. | 493.0 |

Example 10.

Organic-inorganic hybrid material, applicable as pigment grade corro-sion inhibitor, corresponding to the phase-composition formula of

$$0.06Zn(DTP)_2 \,/\, ZnNCN \,/\, 0.4\ CaSiO_3 \,/\, 0.2Zn_3(PO_4)_2\ 2H_2O$$

where $Zn(DTP)_2$ symbolizes Zn-(S(S)P[-$OCH_2$-CH(C $H_3$)C $H_3$]$_2$ or Zn-O, O-di-i-butyl-dithiophosphate, was synthesized according to the following procedure:

Mixed dispersion (A), containing 138.5 g. (1.7 moles)of ZnO, 116.5 g.(1.0 moles) of $CaSiO_3$/1000 ml. $H_2O$ and solution (B) of 2.25 moles $ZaSO_4$/1500 ml., the latter at approximately pH = 4.0, were prepared following the applicable section of Example 2. and common procedure, respectively.

Concurrently, solutions (C) and (D), comprising 1.0 mole $Na_3PO_4$, 0.6 moles $Na_2NCN$ /1000 ml $H_2O$ and 0.3 moles of Na-DTP/500 ml $H_2O$, respectively, were prepared at ambient temperature.

Pigment grade hybrid material, according to the above specified phase-composition formula, was produced by introducing first, in about 30 min., 1.8 moles of aqueous $H_2NCN$ and subsequently (in about 30 min.) solutions (B), (C) and (D) (simultaneously) into intensively stirred dispersion (A); pH = 7-8 of the reaction medium was observed.

Same reaction conditions were hold for additional 60 min. at 60-65°C and subsequently, the suspension's solid phase was separated by filtration, washed to soluble salt-free conditions and further processed in identical fashion as disclosed in the applicable section of Example 2.

Pertinent analytical data and IR spectra are presented in Table 10 and Fig. 11.

Table 10.

| Measured parameter | Determined value |
|---|---|
| Appearance | white powder |
| Zn total % | 50.05 |
| NCN % | 10.7 |
| pH | 8.2 |
| Oil absorption, lbs/100 lbs | - |
| Spec. gravity | 3.23 |
| Yield, g. | 230.0 |

Example 11.

In order to evaluate the cure-inhibitive activity of various organic-inorganic hybrid pigments produced according to the present invention, the medium oil alkyd resin based paint formulation presented under 1.5. 1/Table 1.2 of Example 1 and the test procedure according to 1.6/Example 1, were employed. In this case, however, all hybrid pigments were tested at 4% by weight of paint formulation and, again, tack-free applications were considered cured. Data are presented below.

**Table 11.**

| Hybrid Pigment | Example No. | Observation: |
|---|---|---|
| $0.05Zn(MBT)_2/ZnNCN$ | 2.1 | No cure inhibition |
| $0.05Zn(MBT)_2/ZnNCN/0.5CaSiO_3$ | 2.2 | " |
| $0.05Zn(MBI)_2/ZnNCN/05\cdot CaSiO_3$ | 3.1 | " |
| $0.05Zn(MTH)_2/ZnNCN/0.5CaSiO_3$ | 3.2 | " |
| 0.075Zn-DMTD/ZnNCN | 5 | " |
| $0.05Zn(CyM)_2/ZnNCN/0.5CaSiO_3$ | 9 | " |
| $0.06Zn(DTP)_2/ZnNCN/$ $0.4CaSiO_3/0.2Zn_3(PO_4)_2 2H_2O$ | 10 | " |
| $005dCy\text{-}MBT/ZnNCN/0.5CaSiO_3$ | 8 | " |
| $0.06Zn(n\text{-}pDC)_2/ZnNCN/$ $0.21SrMoO_4/0.1Zn_3(PO_4)_2 2H_2O$ | 7 | " |

As observed, no hybrid pigment (tested at 4% by weight) displayed cure inhibitive activity in the radically cured, solvent based medium oil alkyd paint system; such behavior indicates, that hybrid pigments synthesized according to the present invention are essentially free of un-complexed thiol compounds. Notably, all technical grade $Zn(MBT)_2$ prepared pursuant to U.S. Patent 4,329,381 displayed cure inhibition.(See Table 1.3 & Example 1 for details).

Example 12.

Selected pigment grade hybrid composites synthesized according to the present invention, were tested (comparatively to strontium chromate), as a pigment component of protective primer formulations, specifically for their inhibitive activity to metal corrosion.

Two such solvent based epoxy/polyamide (two component) test formulations (identified as 12.1 and 12.2) and corresponding control formulations, were applied and tested on aluminum and copper substrates. Details are presented below in Table 12. It will be observed, that in both cases pigment grade strontium chromate was employed as corrosion inhibitor component of the respective control formulations.

Table 12

| **Components of of Formulations 12.1 & 12.2** | **Trade names & Suppliers of Components** | **Parts by Weight** | | | |
|---|---|---|---|---|---|
| | | **12.1.** | | **12.2.** | |
| | | **Test** | **Control** | **Test** | **Control** |
| **Epoxy Base**<br>Epoxy Resin | Shell Epon 1001-CX-75 | 320.0 | same as test | 320.0 | same as test |

Table 12 (continued)

| Components of of Formulations 12.1 & 12.2 | Trade names & Suppliers of Components | Parts by Weight | | | |
|---|---|---|---|---|---|
| | | 12.1. | | 12.2. | |
| | | Test | Control | Test | Control |
| **Solvents** | Xylene | 50.0 | " | 50.0 | " |
| | Toluene | 103.0 | " | 103.0 | " |
| | *PM Acetate | 40.0 | " | 40.0 | " |
| | MIBK | 40.0 | " | 40.0 | " |
| | MEK | 60.0 | " | 60.0 | " |
| | Butanol | 20.0 | " | 20.0 | " |
| **Fillers** | R-900 TiO2 | 75.0 | " | 75.0 | " |
| | Blanc Fixe Micro | 100.0 | " | 100.0 | " |
| | 399 Talc | 155.0 | 200.0 | 100.0 | 200.0 |
| | Omya Carb F (1) | - | - | 55.0 | - |
| **Additives** | Aerosil R-972 (2) | 2.0 | " | 2.0 | " |
| | Beetle 216-8 (3) | 15.0 | " | 15.0 | " |
| Corrosion Inhibitor Pigments | | | | | |
| $Zn(MBT)_2$/ZnNCN/ $CaSiO_3$(See Example 2.2) | | 95.0 | - | - | - |
| Zn-DMTD/ZnNCN (See Ex 5) | | - | - | 95.0 | - |
| Strontium Chromate SrCrO4-176 (4) | | - | 50.0 | - | 50.0 |
| **Catalyst** | | | | | |
| Hardener | Aramide 220 Polyamide | 160.0 | " | - | - |
| | Shell 3115-X-70 Polyamide | - | - | 160.0 | " |
| Solvents | Toluene | 168.0 | " | 168.0 | " |
| | MIBK | 222.0 | " | 222.0 | " |
| | PM Acetate | 141.0 | " | 141.0 | " |
| | Butanol | 40.0 | " | 40.0 | " |
| | Volumes: | Approximately 0.45 $m^3$ (100 gal.) | | | |

* PM Acetate - Propylene glycol methyl ether Acetate; Raw material suppliers: (1) Omya, Inc.; (2) DeGussa Co.; (3) American Cyanamide; (4) Wayne Pigment Co.

Example 13.

Test formulation 12.1 (see Example 12) was employed to evaluate effectiveness on aluminum of the corrosion inhibitive activity of pigment grade hybrid symbolized by $0.05Zn(MBT)_2/ZnNCN/0.5CaSiO_3$ phase composition formula synthesized according to Example 2.2

For that purpose, the 12.1 and related control formulations were applied by wire-wound rod on Type A 3003 H14 Aluminum panels (from The Q-Panel Co.), at $1.5 \times 10^{-3}$ - $2.0 \times 10^{-3}$ cm (0.6-0.8 mils) thickness, aged for 7 days at room temperature, vertically scribed and subsequently subjected to salt spray exposure (according to ASTM B-117). It will be noted, that the coatings' observed corrosion inhibitive performance is considered being directly proportional with the tested pigment components' corrosion inhibitive activity. Test results are summarized in Table 13.

Table 13.

| Formulation / pigment | Salt spray exposure inhibitor | Observation time |
|---|---|---|
| Test 12.1/hybrid, Example 2.2 | 7000 hours | No blisters, coating intact |
| Control 12.1/$SrCrO_4$ | 7000 hours | " |

Based on the above presented experimental results it can be concluded that hybrid pigment of 0.05Zn$(MBT)_2$/ZnNCN/0.5CaSi$O_3$ phase composition possesses excellent corrosion inhibitive activity on aluminum, being equally effective as $SrCrO_4$, which is regarded the industrial standard for such applications.

Example 14

Test formulations 12.1 and 12.2 (see Example 12) were used to assess on copper the corrosion inhibitive activity of pigment grade hybrids symbolized by 0.05Zn$(MBT)_2$/ ZnNCN/0.5.CaSi$O_3$ (Example 2.2) and 0.075.Zn-DMTD/ZnNCN phase composition formulas, the latter being synthesized according to Example 5.

Both test and the pertinent control formulation were applied on commercially available copper panels, baked, aged for 7 days at room temperature, vertically scribed and subsequently tested. The evaluation of corrosion inhibitive activity of the above specified hybrid pigment varieties, comparatively to $SrCrO_4$, was performed according to an electrolytic procedure, (of NIKE- TECH, Inc., of Alvarado TX.) as follows:

Anodically polarized test and control panels, as well as an inert cathode, are simultaneously immersed in an aqueous electrolyte solution containing NaCl, ammonia, $Na_2SO_4$ and surfactant; 6 Volts DC is applied for 30 min. at ambient temperature after which the physical integrity of the coatings are visually evaluated and performance graded on a 1 (worst) to 5 (best) scale.

It is noted again that coatings' protective performance is considered to be directly proportional with the tested pigment component corrosion inhibitive activity.

Test results are summarized in Table 14.

Table 14.

| Formulation/inhibitor pigment | Performance grade of inhibitor pigment |
|---|---|
| Test 12.1/hybrid, according to Example 2.2 | 4 |
| Control 12.1/$SrCrO_4$ | 1 |
| Test 12.2/hybrid, according to Example 5. | 4 |
| Control 12.2/$SrCrO_4$ | 1 |

Based on these test results it can be concluded that hybrid pigments having 0.05·Zn$(MBT)_2$/ZnNCN/0.5·$CaSiO_3$ and 0.075·Zn-DMTD/ZnNCN phase composition formulas display excellent corrosion inhibitive activity on copper, substantially better than $SrCrO_4$ which is the industry standard for such applications.

Example 15.

Pigment grade hybrids of 0.05Zn$(MBT)_2$/ZnNCN, 0.05Zn$(MBT)_2$/ZnNCN/0.5CaSi$O_3$, 0.05Zn$(MBI)_2$/ZnNCN/0.5$CaSiO_3$ and 0.05.Zn$(MTH)_2$/ZnNCN/0.5CaSi$O_3$ phase composition formulas, synthesized according to Examples 2.1, 2.2, 3.1 and 3.2, of the present invention, were tested for their corrosion inhibitive activity on silver, as pigment components of "mirror backing" coating formulations. The test formulation employed, which is well known by the industry, is presented below:

Table 15.1

| Components of formulation | Trade names & suppliers | Parts by weight |
|---|---|---|
| Resin component | Acryloid B-67 (1) | 33.0 |
| Solvent | Xylene | 42.0 |
| Corrosion inhibitor Pigment Hybrids as above disclosed * | | 25.0 |
| | | 100.0 |

* Pigment grade ZnNCN, manufactured according to U.S. Patents 5,176,894 and 5,378,446 by Wayne Pigment Co., Milwaukee, Wi; was used in the control formulation, (1) - supplied by Rohm & Haas;

The experimental work was performed by Nike-Tech, Inc. (located at FM 1807 Nike North, Alvarado, Tx., 76009). It did include preparation of Ag mirror substrates, application by dipping of test and control coatings at approximately $2.5 \times 10^{-3}$cm (1.0 mil) dry thickness, 24 hours air drying and vertical scribing of the test panels. The evaluation of corrosion inhibitive activity of the above specified hybrid pigment varieties, comparatively to ZnNCN, was performed according to the electrolytic procedure described in detail in Example 14. Test results are summarized below.

Table 15.2

| Inhibitor pigment tested/ (phase composition formula) accorded | According to Example | Performance grade |
|---|---|---|
| $0.05Zn(MBT)_2/ZnNCN$ | 2.1. | 5 |
| $0.05Zn(MBT)_2/ZnNCN/0.5CaSiO_3$ | 2.2. | 5 |
| $0.05Zn(MBI)_2/ZnNCN/0.5CaSiO_3$ | 3.1. | 4 |
| $0.05 \cdot Za(MTH)_2/ZnNCN/0.5CaSiO_3$ | 3.2. | 4 |
| ZnNCN | * | 4 |

* Produced by Wayne Pigment Co.

Based on the presented experimental results it can be concluded that pigment grade hybrid materials produced specifically according Examples 2.1 and 2.2 possess high corrosion inhibitive activity on silver, being superior in that respect to ZnNCN, a state of the art lead-free pigment recommended for such applications.

Example 16.

Pigment grade organic-inorganic hybrid, according to Example 2.2, described by phase composition formula of $0.05Zn(MBT)_2/ZnNCN/0.5CaSiO_3$, was evaluated in solvent based medium oil alkyd formulation for synergistic behavior in respect of inhibition of steel corrosion. Distinct test formulations, containing the pigment grade hybrid composition, its phase constituents (pigment grade ZnNCN, $CaSiO_3$ -Wollastonite grade, technical grade $Zn(MBT)_2$ produced according to Example 1.3), pigment grade $SrCrO_4$ and zinc phosphate dihydrate, respectively, were sprayed on cold rolled steel panels (from The Q-Panel Co.), at $3.8 \times 10^{-3}$cm (1.5 mil) film thickness. The exhibits were air dried, aged overnight at 72°C (130°F), scribed, and subsequently exposed to salt spray conditions for 670 hours, following to ASTM B-117 and evaluated by ASTM D-714; the test coatings' overall corrosion inhibitive performances, considered directly proportional with pertinent pigments' corrosion inhibitive activity, were comparatively evaluated and graded on O (worst) to 10 (best) scale. The test formulations and results are presented below in Table 16.1 and 16.2, respectively.

Table 16.1

| Components of test formulation | Trade names & suppliers | Parts by weight |
|---|---|---|
| Mill base | | |
| Medium oil alkyd | | |
| resin | Duramac 2455 (1) | 273.5 |
| Solvent | Xylene | 25.5 |
| Filler pigments | RCL-535 TiO2 (2) | 86.0 |
| | 40-27 Talc (3) | 56.0 |
| | Sparmite Barytes (4) | 71.0 |

Table 16.1 (continued)

| Components of test formulation | Trade names & suppliers | Parts by weight |
|---|---|---|
| **Mill base** | | |
| **Medium oil alkyd** | | |
| **Antisettling** | **Bentone 38 (5)** | **4.2** |
| **Pigment grade** | | |
| **corrosion inhibitors** | *** see Table 16.2.** | **25.5** |
| **Letdown** | | |
| **Resin** | **Duramac 2455** | **240.0** |
| **Solvent** | **Xylene** | **72.0** |
| **Driers** | **6% cobalt drier (6)** | **2.1** |
| | **6% Zirco drier (6)** | **21.0** |
| **Antiskinning** | **Methyl Ethyl Ketoxyme** | **2.1** |
| **Volume:** | | **approximately 0,45 $m^3$ (100 gal.)** |
| Raw material suppliers: (1) McWhorther Technologies; (2) SCM; (3) Pfizer Inc.,Chemical Div.; (4) Harcros; (5) Rheox, Inc.;(6) Interstab Chemicals, Inc.; | | |

**Table 16.2**

**Results of the evaluation of pigments' corrosion inhibitive activity .**

| Inhibitor pigment of test coatings | Status of test coatings after 670 hours. | Overall grading of pigments' inhibitive performance | Observation |
|---|---|---|---|
| $Zn(MBT)_2$ | Test coating could not be cured. | 0 | Component of hybrid according Example 2.2 |
| ZnNCN | Extensive delamination, dense blisters. | 0 | " |
| $CaSiO_3$ | Extensive delamination, medium dense blisters. | 0 | " |
| Hybrid according to Example 2.2 | 2-5 mm. creepage at scribe, few blisters | 7 | Pigment displays synergy |
| Zinc Phosphate-Dihydrate | Extensive delamination, medium dense blisters. | 0 | Control pigment; |
| $SrCrO_4$ | Limited creepage at scribe, few blisters. | 7 to 8 | Control pigment, standard of the industry; |

Pigment grade hybrid according to Example 2.2, displays synergistically enhanced corrosion inhibitive activity on cold rolled steel, performing substantially better in that sense, than pigment grade $Zn_3(PO_4)_2(H_2O)_2$ and at comparative level to $SrCrO_4$. It is as well the manifestation of synergy, that the same pigment composition evidently outperforms the components which is constituted of.

Example 17

17.1: Multi-component pigment grade composition, characterized by synergistic behavior in respect of inhibition of steel corrosion, symbolized by the phase composition formula of

$$ZnNCN/0.77ZnO/0.77Zn_3(PO_4)_2(H_2O)_4/2.42CaSiO_3/$$

was synthesized according to the following procedure: Mixed suspension, containing finely ground 1.0 moles ( 81.38 g.) of ZnO, 0.075 moles (11.0 g.) $SrCO_3$, 0.6 moles (69.5g.) of $CaSiO_3$ in 1000 ml. water, was prepared by overnight agitation at normal temperature of the above mixture. Aqueous solution of about 50%, containing 0.38 moles $H_3PO_4$ was introduced first, at ambient temperature, into the intensively stirred mixed suspension in approximately 60 minutes; subsequently, 0.25 moles of $H_2NCN$ (as aqueous solution of 25%) were introduced into the reaction mixture, after which, by keeping the same reaction conditions, the process was finalized in one hour.

The synthesized multi- component pigment was further processed in identical fashion as described in the applicable section of Example 2, except that it was dried at a moderate temperature of 70-80°C, in order to preserve the tetrahydrate composition of the zinc phosphate constituent. Related analytical data and IR spectra are presented in Table 17.1 and Fig. 11, respectively.

Table 17.1

| **Measured parameter** | **Determined value** | |
|---|---|---|
| **Appearance** | **white powder** | |
| | **Zn total %** | **32.0** |
| | **NCN %** | **10.7** |
| | **pH** | **7.5** |
| | **Oil absorption, lbs/100 lbs** | **34** |
| | **Spec. gravity** | **2.95** |
| | **$H_2O$ % (by loss at 200°C)** | **5.0-6.0** |
| **Yield, g.** | | **210.0** |

17.2: Multi-component pigment grade composition according to Example 17.1 was evaluated in a solvent-based medium oil alkyd formulation for synergistic behavior with respect to inhibition of steel corrosion, in identical fashion as described in detail at the introductory section of Example 16. In this case, however, the distinct test formulations contained the multi-component pigment composition, its phase constituents (pigment grade ZnNCN, $CaSiO_3$-Wollastonite grade, $Zn_3(PO_4)_2(H_2O)_4$), coprecipitated mixtures of $ZnNCN/Zn_3(PO_4)_2(H_2O)_4$, respectively, $ZnO/Zn_3(PO_4)_2(H_2O)_4$ and pigment grade $SrCrO_4$ (see Table 17.3). The test formulation employed and the results of corrosion inhibitive activity evaluation are presented below in Table 17.2 and 17.3, respectively.

Table 17.2

| **Components of test formulation** | **Trade names & suppliers** | **Parts by Weight** |
|---|---|---|
| **Mill base** | | |
| **Medium oil alkyd** | | |
| **resin** | **Duramac 2455 (1)** | **233.5** |
| **Solvent** | **Xylene** | **85.5** |
| **Filler pigments** | **Red iron oxide 1646 (2)** | **32.2** |
| | **40-27 Talc (3)** | **208.0** |
| **Antisettling** | **Bentone 38 (4)** | **4.0** |
| **Pigment grade** | | |
| **corrosion inhibitors** | **see Table 17.3** | **58.5** |
| **Letdown** | | |
| **Resin** | **Duramac 2455** | **293.0** |
| **Solvent** | **Xylene** | **74.0** |
| **Driers** | **6% Cobalt Drier (5)** | **2.3** |
| | **6% Zirco Drier (5)** | **21.8** |
| **Antiskinning** | **Methyl Ethyl Ketoxyme** | **2.3** |
| **Volume:** | | **approx 0.45 $m^3$ (100 gal.)** |

Table 17.2 (continued)

| Components of test formulation | Trade names & suppliers | Parts by Weight |
|---|---|---|
| **Letdown** | | |
| Raw material suppliers: (1) McWhorther Technologies; (2) U.S.Oxides; (3) Pfizer Inc.,Chemical Div.; (4) Rheox, Inc.;(5) Interstab Chemicals, Inc.; | | |

**Table 17.3**

**Results of the evaluation of pigments' corrosion inhibitive activity.**

| Inhibitor pigment component of test coatings. | Status of test coatings after 240 hours. | Overall grading of pigments' inhibitive performance. | Observation |
|---|---|---|---|
| None | Extensive delamination, dense blisters; | 0 | Control. |
| ZnNCN | Extensive delamination, medium dense blisters | 0 | Component of pigment according to Example 17.1 |
| $CaSiO_3$ | Extensive delamination, dense blisters; | 0 | " |
| $Zn_3(PO_4)_2(H_2O)_4$ | " | 0 | " |
| ZnNCN / $Zn_3(PO_4)_2(H_2O)_4$ | Extensive delamination, medium dense blisters; | 0 | " |
| ZnO / $Zn_3(PO_4)_2(H_2O)_4$ | " | 0 | " |
| Pigment according to Example 17.1 | 5 mm creapage at scribe; few blisters | 8 | Pigment displays synergy at scribe |
| $SrCrO_4$ | Limited creepage at scribe; few blisters; | 9 | Control pigment, standard of the industry; |

Based on the above presented results of the comparative evaluation, it can be concluded, that the multi-component pigment composition according to Example 17.1, displays synergy in respect of corrosion inhibition on steel.

## Claims

1. A corrosion-inhibiting composition for application to a metal substrate comprising a film-forming organic coating composition having a pigment phase which comprises a stable hybrid organic/inorganic suspension which contains suspended ZnNCN and an organic zinc or alkyl-ammonium salt of mercapto- and/or thio- compounds or the alkyl-substituted derivatives of the mercapto- and/or thio-compounds.

2. A composition according to claim 1 which comprises a mixture of said organic zinc salts.

3. A composition according to claim 1 wherein the organic zinc or alkyl-ammonium salt is a compound selected from mercaptobenzothiazole, mercaptothiazoline, mercaptobenzimidazole, mercaptoimidazole, 2,5-dimercapto-1,3,4-thiodiazole, 5,5-dithio-bis(1,3,4-thiadiazole)-2(3H)-thione, mercaptobenzoxazole, mercaptothiazole, mercaptotriazole, mercaptopyrimidine, mercaptopyridine, mercaptoquinoline, alkyl- and cyclo-alkyl mercaptanes, N-alkyl- or N-cycloalkyl-dithiocarbamates, O-alkyl- or O-cycloalkyl-dithiocarbonates, O,O-dialkyl- and O,O-dicycloalkyl-dithiophosphates.

4. A method of providing corrosion resistance to a metal surface which comprises applying to said surface a composition according to claim 1, wherein the pigment phase contains a corrosion-protecting amount of the hybrid organic/inorganic suspension.

5. A corrosion-inhibiting composition according to claim 3 wherein the inorganic phase includes a cation selected from Zn, Al, Mg, Ca, Sr, Ti, Zr, Ce and Fe and an anion selected from phosphates, polyphosphates, phosphites, molybdates, silicates and cyanamides.

## Patentansprüche

1. Korrosions-Inhibitor-Zusammensetzung für eine Anwendung bei einem metallischen Substrat mit einer organischen, einen Film bildenden Überzugszusammensetzung, die eine Pigment-Phase hat, welche eine stabile hybride organisch - anorganische Suspension aufweist, die ZnNCN in suspendierter Form beinhaltet und ein organisches Zink- oder Alkyl-Ammonium - Salz von Merkapto- und/oder Thio-Bestandteilen oder den alkyl-substituierten Derivaten von Merkapto- und/oder Thio-Bestandteilen beinhaltet.

2. Zusammensetzung nach Anspruch 1, welche eine Mixtur aus den genannten organischen Zink-Salzen aufweist.

3. Zusammensetzung nach Anspruch 1, wobei das organische Zink- oder Alkyl-Ammonium-Salz ein Bestandteil aus Merkaptobenzothiazol, Merkaptothiazolin, Merkaptobenzimldazol, Merkaptoimidazol, 2,5-Dimerkapto-1,3,4-Thlodiazol, 5,5-Dithio-bis(1,3,4-Thiadiazol)2(3H)-Thion, Merkaptobenzoxazol, Merkaptothiazol, Merkaptotriazol, Merkaptopyrimidine, Merkaptopyridin, Merkaptoquinolin, Alkyl- und Zyklo-Alkyl-Merkaptan, N-Alkyl- oder N-Zykloalkyl-Dithiokarbamat, O-Alkyl- oder O-Zykloalkyl-Dithiocarbonat, O,O-Dialkyl- und O,O-Dizykloalkyl-Dithiophosphat ist.

4. Verfahren zur Bereitstellung eines Korrosionswiderstandes für eine metallische Oberfläche, bei dem auf die Oberfläche eine Zusammensetzung nach Anspruch 1 appliziert wird, wobei die Pigment-Phase eine korrosions-schützende Menge der hybriden organisch - anorganischen Suspension enthält.

5. Korrosions-inhibitor-Zusammensetzung nach Anspruch 3, bei der die anorganische Phase ein Zn-, Al-, Mg-, Ca-, Sr-, Ti-, Zr-, Ce- oder Fe - Kation und ein Phosphat-, Polyphosphat-, Phosphit-, Molybdat-, Silikat- oder Zyanamid - Anion beinhaltet.

## Revendications

1. Composition inhibitrice de la corrosion pour une application sur un substrat métallique comprenant une composition de revêtement organique filmogène ayant une phase de pigment qui comprend une suspension organique/inorganique hybride stable qui contient du ZnNCN en suspension et un sel organique de zinc ou d'alkyl-ammonium de composés mercapto et/ou thio ou les dérivés alkyle-substitués des composés mercapto et/ou thio.

2. Composition selon la revendication 1, qui comprend un mélange desdits sels organiques de zinc.

3. Composition selon la revendication 1, dans laquelle le sel organique de zinc ou d'alkyl-ammonium est un composé choisi parmi le mercaptobenzothiazole, la mercaptothiazoline, le mercaptobenzimidazole, le mercaptoimidazole, le 2,5-dimercapto-1,3,4-thiodiazole, la 5,5-dithio-bis(1,3,4-thiadiazole)-2(3H)-thione, le mercaptobenzoxazole, le mercaptothiazole, le mercaptotriazole, la mercaptopyrimidine, la mercaptopyridine, la mercaptoquinoléine, les alkyl- et cycloalkyl-mercaptanes, les N-alkyl- ou N-cycloalkyl-dithiocarbamates, les O-alkyl- ou O-cycloalkyl-dithiocarbonates, les 0,0-dialkyl- et O,O-dicycloalkyl-dithiophosphates.

4. Procédé destiné à conférer une résistance à la corrosion à une surface métallique qui comprend l'application à ladite surface d'une composition selon la revendication 1, dans lequel la phase de pigment contient une quantité protectrice contre la corrosion de la suspension hybride organique/inorganique.

5. Composition inhibitrice de corrosion selon la revendication 3, dans laquelle la phase inorganique comprend un cation choisi parmi Zn, Al, Mg, Ca, Sr, Ti, Zr, Ce et Fe et un anion choisi parmi les phosphates, les polyphosphates, les phosphites, les molybdates, les silicates et les cyanamides.

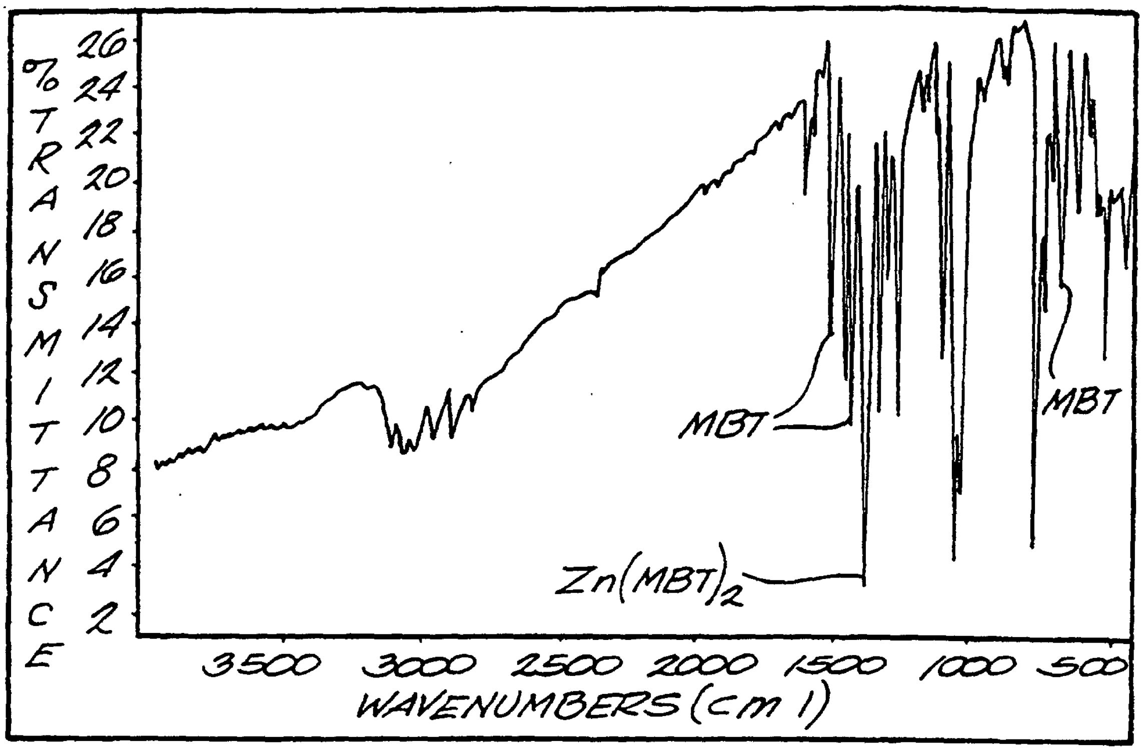


Fig. 1 IR SPECTRUM RELATED TO EXAMPLE #1.1

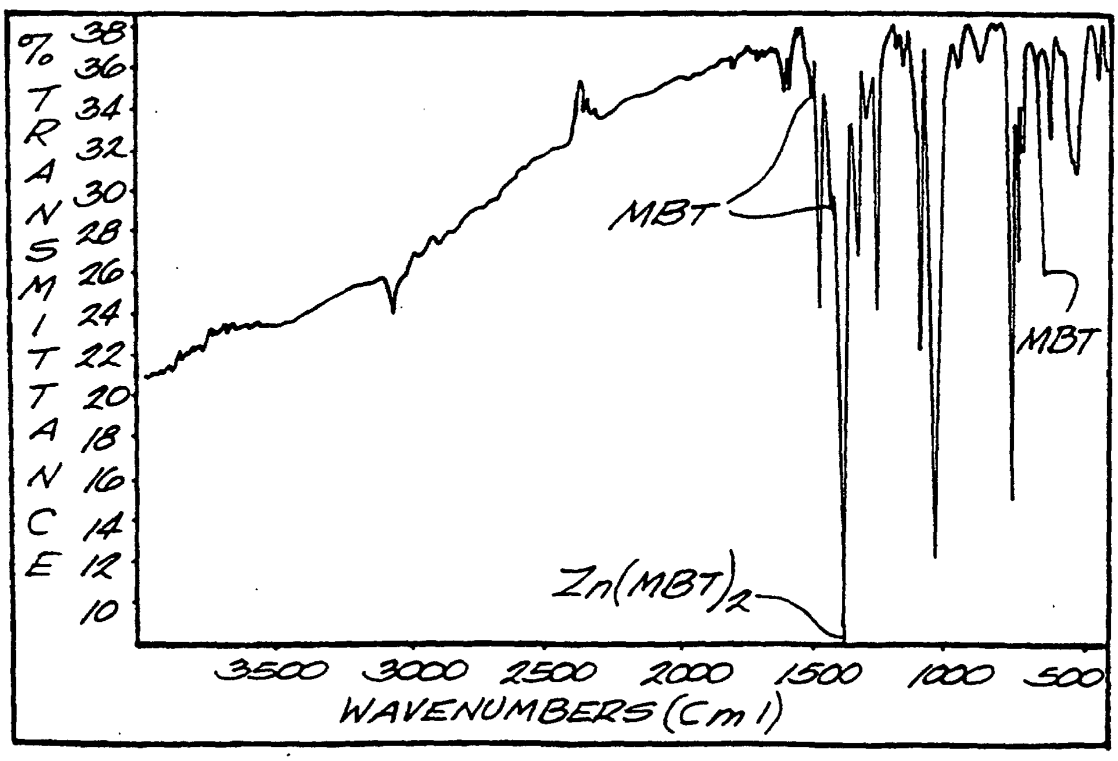


Fig. 2. IR SPECTRUM RELATED TO EXAMPLE #1.3.

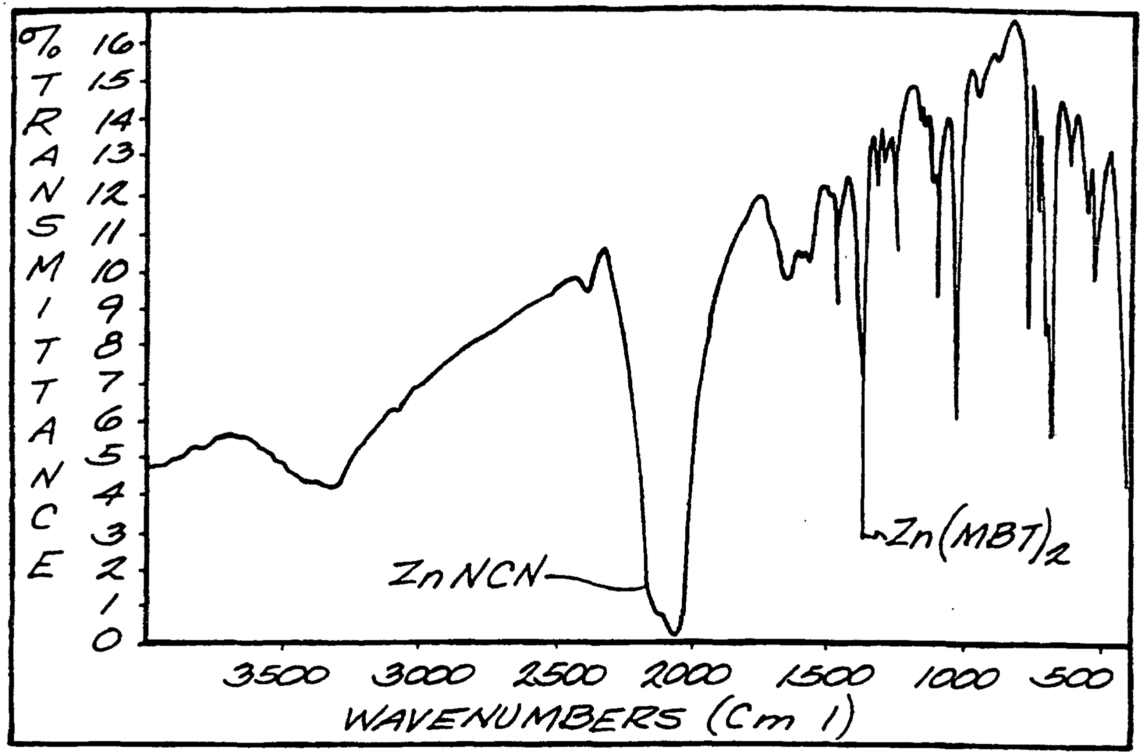


Fig.3 IR SPECTRUM RELATED TO EXAMPLE #1.4.1

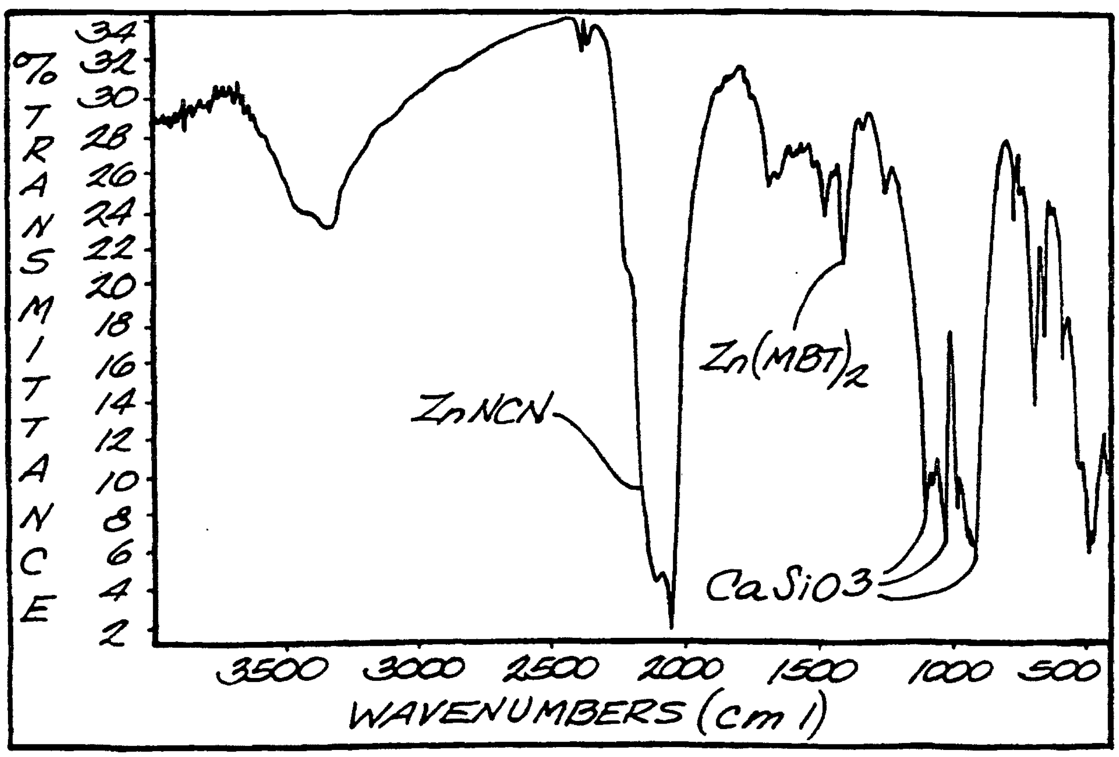


Fig.4 IR SPECTRUM RELATED TO EXAMPLE #2.

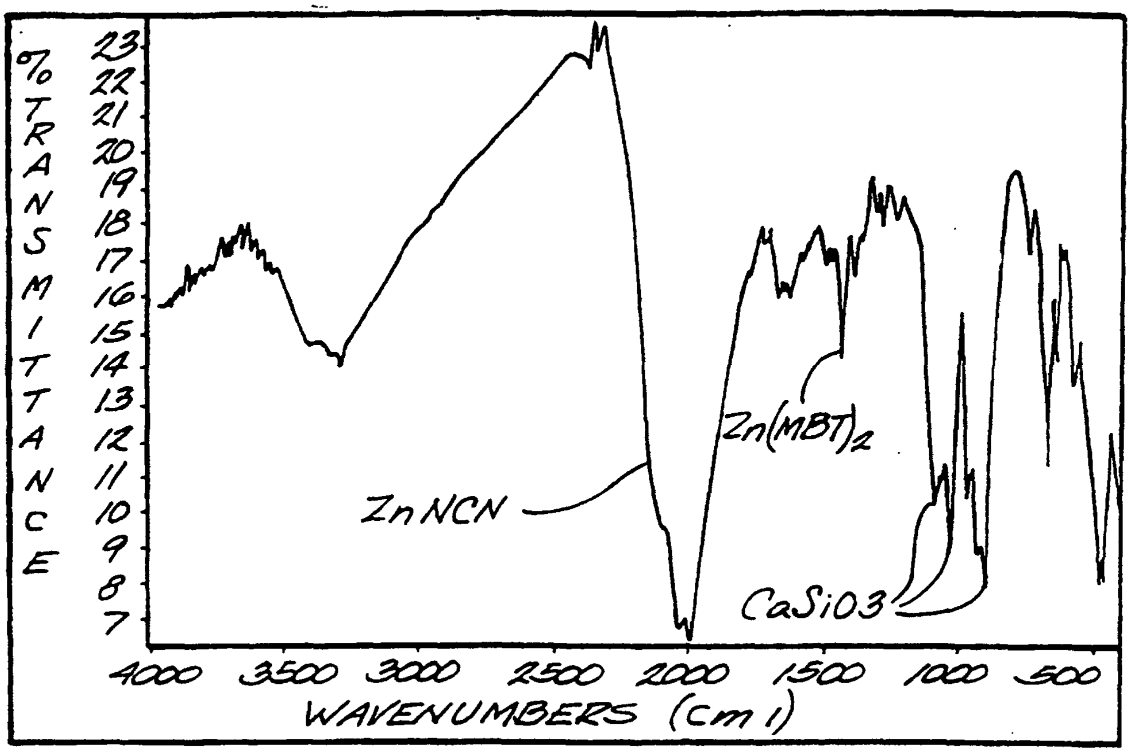


Fig.5 IR SPECTRUM RELATED TO EXAMPLE #3

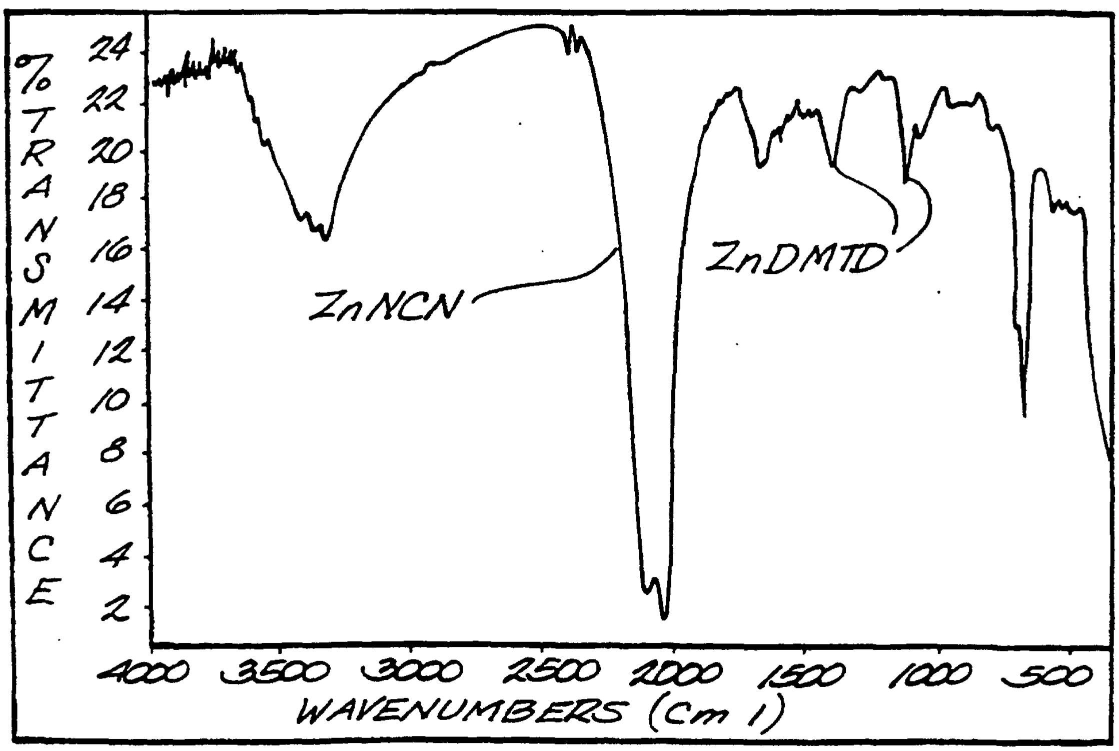


Fig. 6 IR SPECTRUM RELATED TO EXAMPLE #5.

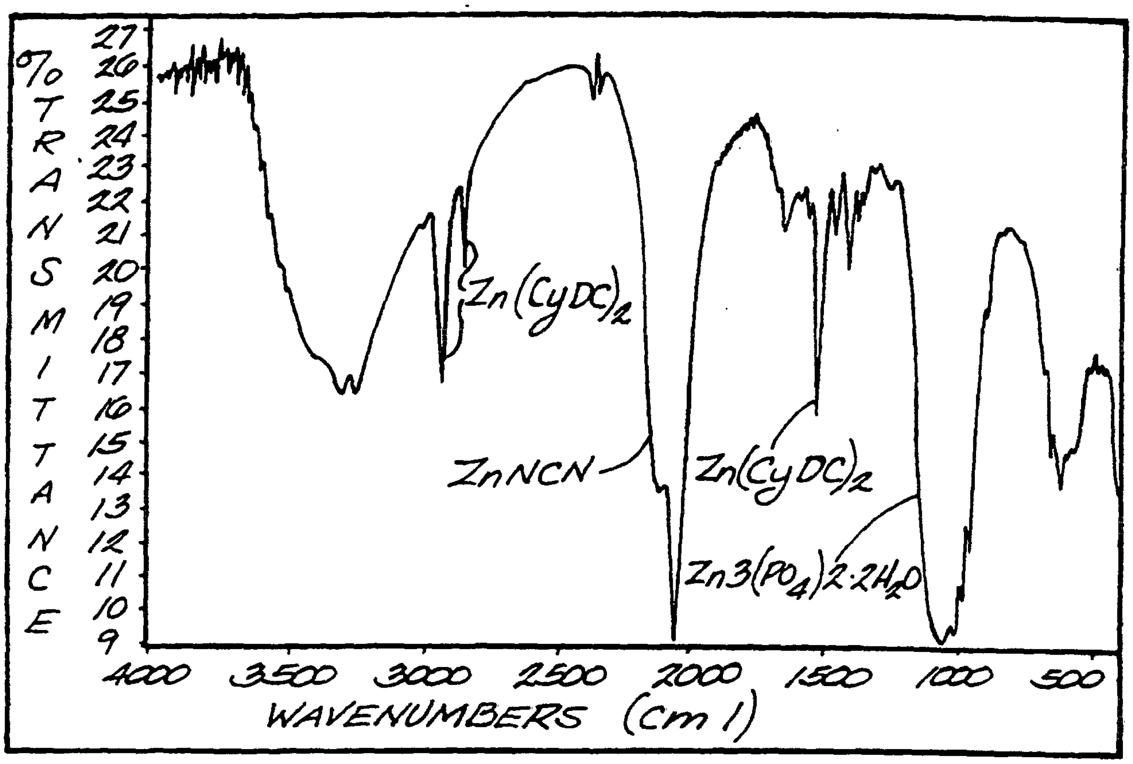


Fig.7 IR SPECTRUM RELATED TO EXAMPLE #6

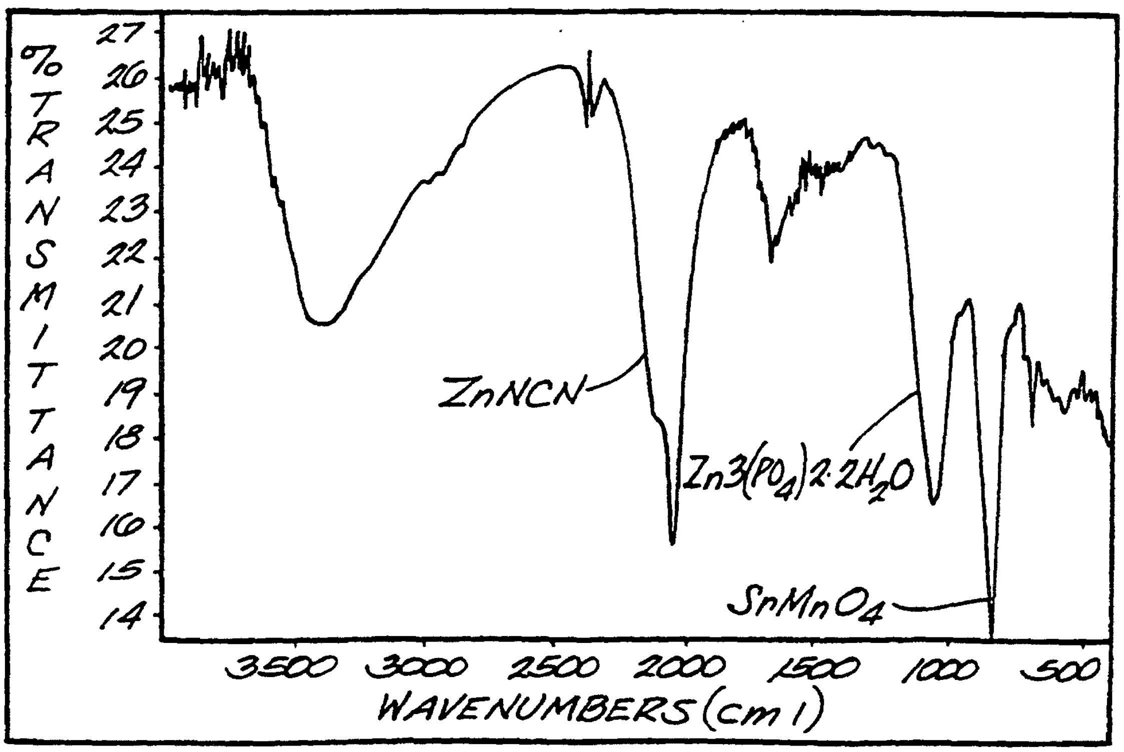


Fig.8 IR SPECTRUM RELATED TO EXAMPLE #7

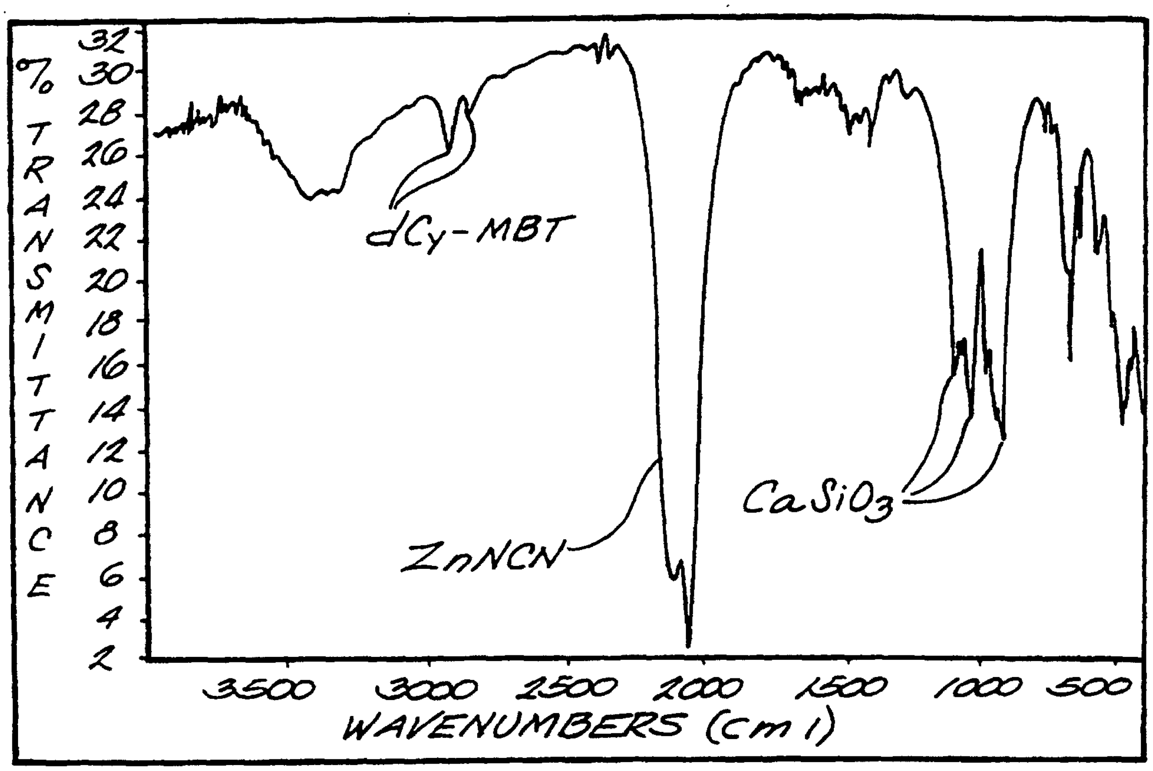


Fig. 9 IR SPECTRUM RELATED TO EXAMPLE #8

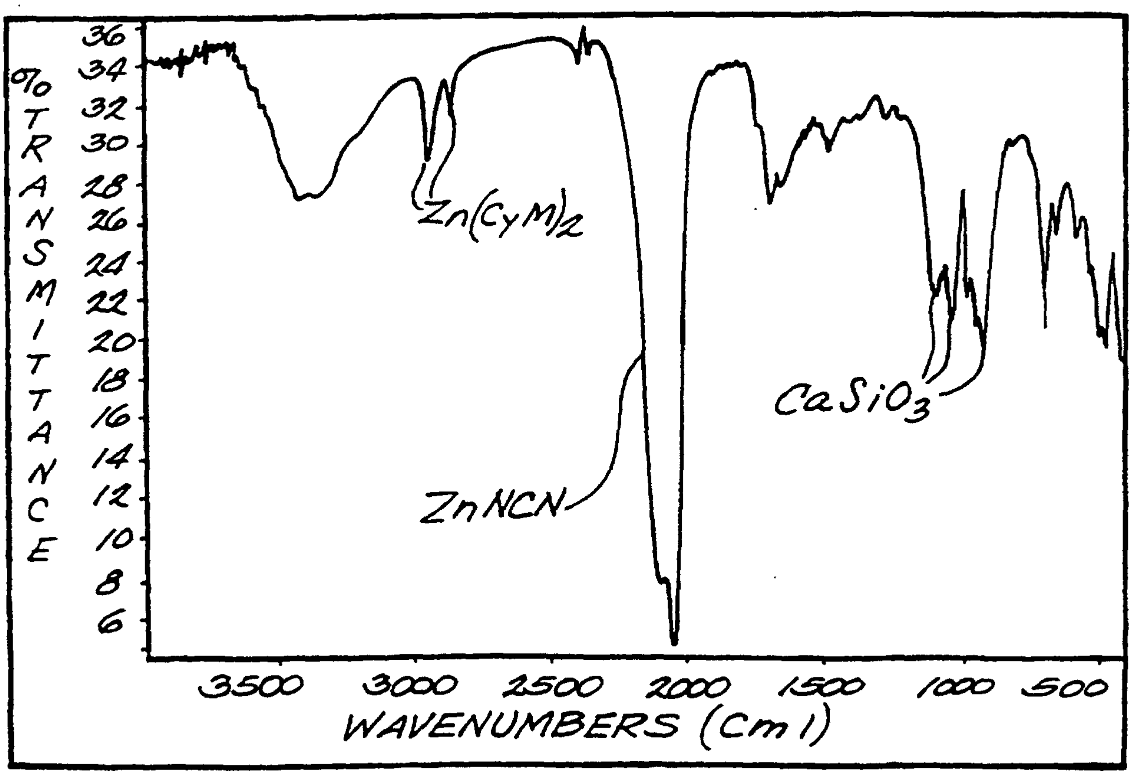


Fig. 10 IR SPECTRUM RELATED TO EXAMPLE #9

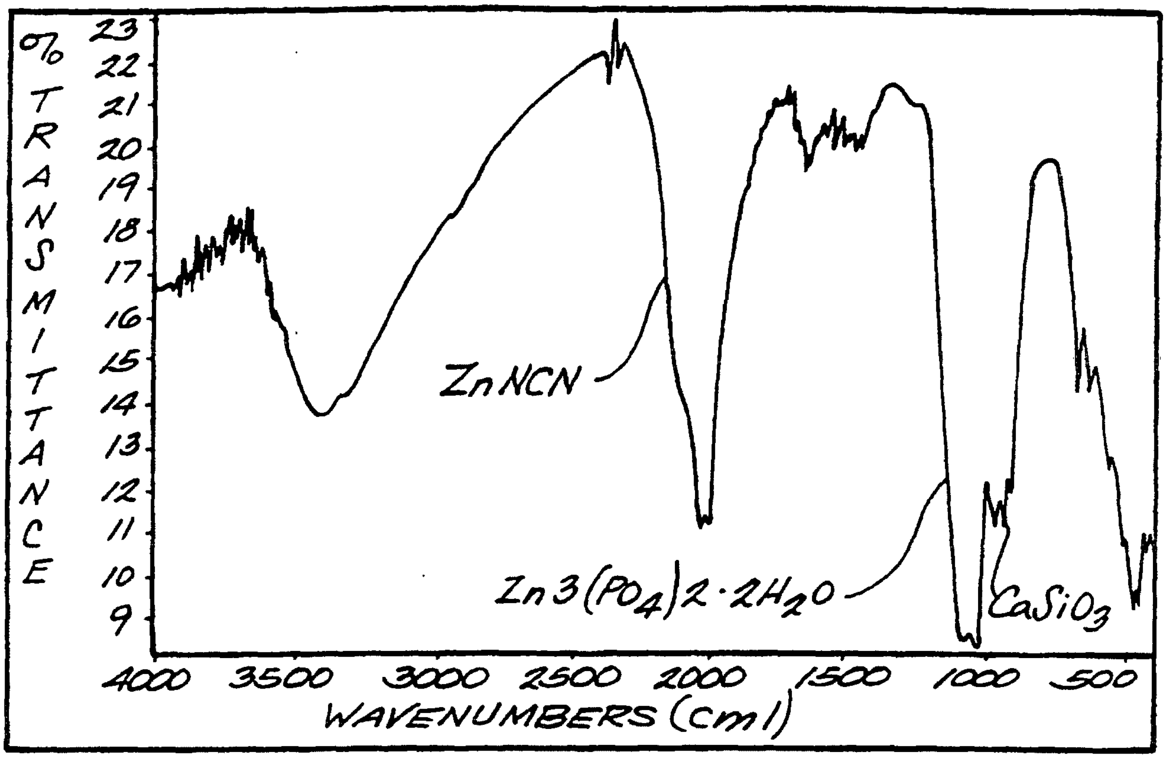


Fig.11 IR SPECTRUM RELATED TO EXAMPLE #10

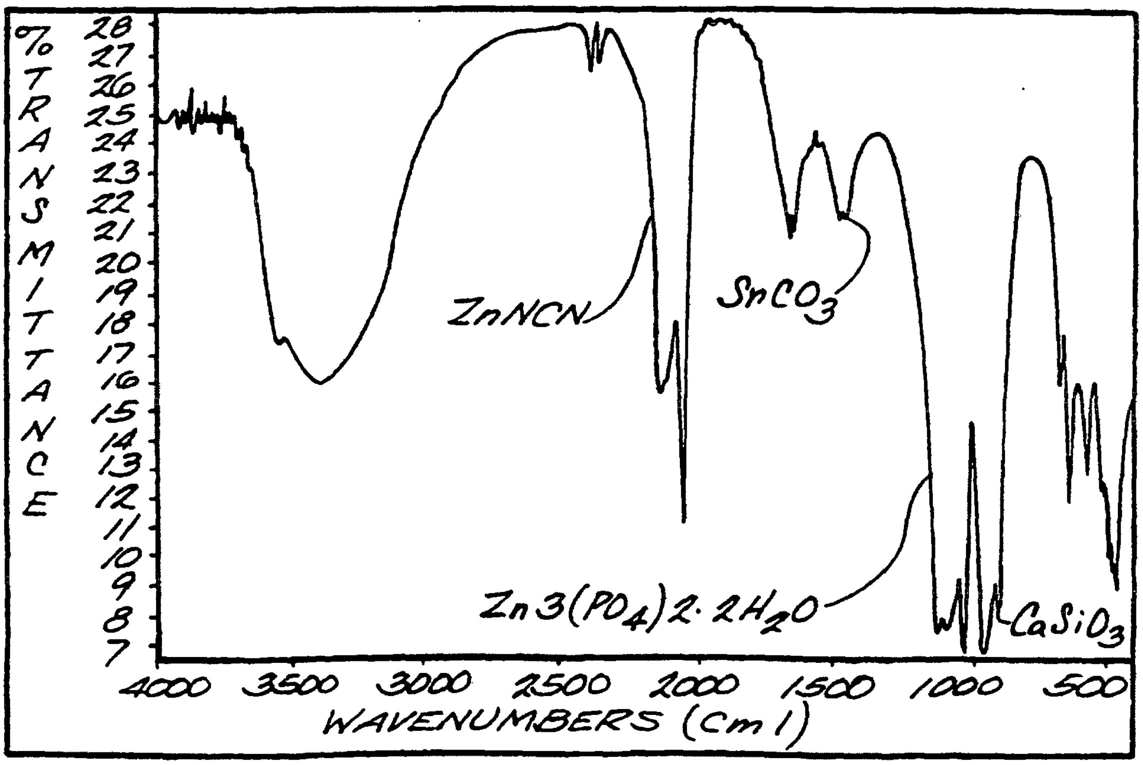


Fig.12 IR SPECTRUM RELATED TO EXAMPLE #17